# EUROPÄISCHE PATENTSCHRIFT

(11) **EP 3 403 860 B1**
(45) Veröffentlichungstag und Bekanntmachung des Hinweises auf die Patenterteilung: **18.03.2020**
(21) Anmeldenummer: 18171911.3
(22) Anmeldetag: 11.05.2018
(51) Int. Cl.: B60J 5/08, E06B 9/17

(54) **VERSCHLUSSANORDNUNG FÜR EINE ÖFFNUNG**
CLOSING ELEMENT FOR AN OPENING
DISPOSITIF DE FERMETURE POUR UNE OUVERTURE

(30) Priorität: 18.05.2017 AT 504242017
(43) Veröffentlichungstag der Anmeldung: 21.11.2018
(73) Patentinhaber: Rosenbauer International AG, 4060 Leonding (AT)
(72) Erfinder: CUMHUR, Cakmak, 3130 Herzogenburg (AT); KARNER, Albert, 3100 St. Pölten (AT); SCHUSTER, Alois, 3123 Oberitzberg-Rust (AT); WARTINGER, Maximilian, 3151 St. Georgen (AT)
(74) Vertreter: Burger, Hannes

(56) Entgegenhaltungen:
- DE-A1- 3 146 445
- DE-A1- 3 435 984
- US-A- 6 098 696

## Beschreibung

Die Erfindung betrifft eine Verschlussanordnung für eine Öffnung, insbesondere für eine Öffnung an oder in einem Kraftfahrzeug, einem Anhänger oder einem Wechselmodul mit einem Dichtelement.

Aus der CH 549 487 A ist eine gattungsgemäß ausgebildete Verschlussvorrichtung für eine Zugangsöffnung eines Geräteraums an einem Löschfahrzeug bekannt geworden. Die Verschlussvorrichtung ist durch einen Lamellenzug von miteinander gelenkig verbundenen Lamellenstäben gebildet, welcher im Bereich der Zugangsöffnung zwischen einer Schließstellung und einer Öffnungsstellung verschiebbar gelagert ist. Dabei sind unmittelbar benachbarte Lamellenstäbe zueinander im wesentlichen berührungsfrei über gesonderte Zwischenglieder miteinander verbunden, in welche die Lamellenstäbe jeweils mit einer C-förmig hinterschnittenen Nut eingreifen. Weiters ist ein Dichtelement an der Oberseite der Zugangsöffnung feststehend am Fahrzeugaufbau angeordnet. Eine Dichtlippe des Dichtelement ragt in Richtung auf den Lamellenzug vor und liegt an diesem stets dichten an.

Die DE 31 46 445 A1 beschreibt einen Rollladen, dessen den Rollladenpanzer bildende Rollladenstäbe in ihrer Bewegung in seitlich am Fenster- oder Türrahmen vorgesehenen Führungen geführt sind. Die Führungen reichen bis an einen Einlaufschlitz eines den aufgewickelten Rollladen aufnehmenden Rollladenkastens. Eine Abdichtung des Rollladenpanzers ist im Einlaufschlitz zumindest gegenüber der Rollladenschürze des Rollladenkastens vorgesehen. Dieses Dichtelement ist an der Außenseite des Rollladenpanzers mit einem seiner Längsränder befestigt und der andere Längsrand ragt als freies Ende über den Rollladenpanzer vor und liegt an der Rollladenschürze des Rollladenkastens an. An der Innenseite des Rollladenpanzers ist ein weiteres Dichtelement befestigt, welches einen dachförmig ausgebildeten Querschnitt mit zwei Schenkeln aufweist, von welchen einer der Längsränder an einem der Rollladenstäbe des Rollladenpanzers befestigt ist. Vom Scheitel des Dichtelements ragt ein Flügel auf die vom Rollladenstab abgewendete Seite vor und liegt in der Verschlussstellung des Rollladenpanzers an der Oberseite des Fenster- oder Türrahmens daran an. In der Öffnungsstellung des Rollladenpanzers liegen jeweils am unteren Ende sowie beidseits des Rollladenpanzers angeordnete weitere Dichtelemente einerseits am Fenster- oder Türrahmen sowie an der Rollladenschürze des Rollladenkastens an. Diese Dichtelemente weisen im Querschnitt gesehen ein Schlauchprofil auf. Es konnte zwar eine Abdichtung des Einlaufschlitzes erzielt werden, wobei deren Befestigung an den jeweiligen Rollladenstäben direkt erfolgt ist und damit die Montage und ein möglicher Wechsel nicht einfach durchzuführen war.

Aufgabe der vorliegenden Erfindung war es, die Nachteile des Standes der Technik zu überwinden und eine Verschlussanordnung zur Verfügung zu stellen, mittels derer ein Benutzer in der Lage ist, eine einfache Montage des Dichtelements zu ermöglichen und einen sicheren Halt am Verschlusselement zu erzielen.

Diese Aufgabe wird durch eine Verschlussanordnung gemäß den Ansprüchen gelöst.

Die erfindungsgemäße Verschlussanordnung dient zum wahlweisen Verschließen oder Freigeben einer Öffnung, insbesondere an oder in einem Kraftfahrzeug, einem Anhänger oder einem Wechselmodul. Mittels der Verschlussanordnung kann ein hinterhalb der Öffnung angeordneter Teilraum oder ein Abteil des Fahrzeugs zugänglich gemacht werden, um z.B. darin aufgenommene Hilfsgeräte, Werkzeuge oder dergleichen entnehmen und nachfolgend wieder darin aufnehmen zu können. Die Verschlussanordnung kann eine eigenständige Baueinheit ausbilden und zumindest nachfolgend angeführte Bauteilkomponenten umfassen:
- ein Verschlusselement mit einem linken Seitenrand, einem rechten Seitenrand, einem ersten Querrand, einem in Richtung der Längserstreckung des Verschlusselements davon distanzierten zweiten Querrand, und mit einer Außenfläche und einer Innenfläche, wobei das Verschlusselement von einer die Öffnung verschließenden Verschlussstellung in eine die Öffnung freigebende Öffnungsstellung verstellbar ist,
- eine Führungsanordnung mit einem linken Führungsprofil und einem rechten Führungsprofil für jeweils einen Seitenrand des Verschlusselements,
- ein Abdeckelement, welches Abdeckelement sich zumindest zwischen dem linken Führungsprofil und dem rechten Führungsprofil erstreckt und die Öffnung randseitig an einem ersten Öffnungsrand begrenzt, wobei das Abdeckelement zwischen sich und der Außenfläche des Verschlusselements einen Schlitz definiert,
- eine Wickelvorrichtung für das Verschlusselement, wobei der erste Querrand des Verschlusselements mit der Wickelvorrichtung in Antriebsverbindung steht, und das Verschlusselement in seiner Öffnungsstellung an der Wickelvorrichtung zu einem überwiegenden Anteil seiner Längserstreckung aufgewickelt ist,
- eine Umlenkvorrichtung, welche Umlenkvorrichtung einen Umlenkabschnitt für das Verschlusselement definiert,
- zumindest ein Dichtelement, welches zumindest eine Dichtelement an der Außenfläche des Verschlusselements angeordnet ist, und sich das Dichtelement zwischen dem linken Seitenrand und dem rechten Seitenrand des Verschlusselements erstreckt und bei sich in der Verschlussstellung befindlichem Verschlusselement am Abdeckelement anliegt und den Schlitz abschließt, wobei
- das Dichtelement in seinem unverformten Zustand als Flachprofil mit einem ersten Längsrand und einem zweiten Längsrand ausgebildet ist, und das Dichtelement zwischen seinem ersten Längsrand und seinem zweiten Längsrand eine Flachprofilbreite aufweist,
- das Verschlusselement weiters einen ersten Profilkörper und einen zweiten Profilkörper umfasst,
- sich die beiden Profilkörper zwischen dem linken Seitenrand und dem rechten Seitenrand des Verschlusselements erstrecken,
- die beiden Profilkörper gelenkig verbunden sind,
- jeder der beiden Profilkörper mit zumindest einem Aufnahmekanal versehen ist, und jeder der Aufnahmekanäle in paralleler Richtung bezüglich der Längserstreckung des Profilkörpers ausgerichtet ist sowie sich in Richtung auf die Innenfläche in den Profilkörper hinein erstreckt,
- der erste Längsrand des Dichtelements im Aufnahmekanal des ersten Profilkörpers und der zweite Längsrand des Dichtelements im Aufnahmekanal des zweiten Profilkörpers aufgenommen ist, und wobei
- bei ebenflächiger Lage der beiden Profilkörper die Flachprofilbreite des Dichtelements größer ausgebildet ist als ein Abstand zwischen dem Aufnahmekanal des ersten Profilkörpers und dem Aufnahmekanal des zweiten Profilkörpers.

Der dadurch erzielte Vorteil liegt darin, dass so durch das Vorsehen von eigenen Profilkörpern und jeweils zumindest einem darin angeordneten Aufnahmekanal eine einfache Montage des Dichtelements am Verschlusselement ermöglicht werden kann. Mittels der beiden Profilkörper kann so das Dichtelement jeweils an einem der Profilkörper in dem dort vorgesehenen Aufnahmekanal eingeschoben und dauerhaft gehalten werden. Weiters kann damit aber auch eine einfache Herstellung des Dichtelements erzielt werden, da nur ein flächig ausgebildetes Material benötigt wird. Durch die größere Breite des Dichtelements und die Befestigung sowie Halterung des Dichtelements im Bereich seiner beiden Längsränder kann so ein Vorwölben des Dichtelements über das Verschlusselement erzielt und damit eine Überbrückung des Schlitzes bis hin zum Abdeckelement erzielt werden. Durch das Halten und Befestigen der beiden Längsränder des Dichtelements kann so aber auch ein unbeabsichtigtes Verklemmen oder Verspießen des Dichtelements während dessen Verstellung in den Schlitz hinein oder aus diesem heraus verhindert werden. Je nach dem gewählten Ausmaß der Flachprofilbreite im Verhältnis zum Abstand zwischen den beiden Aufnahmekanälen der beiden Profilkörper, kann so der Überstand und das Überragen des Dichtelements über die beiden Profilkörper einfach festgelegt werden. Je größer die Flachprofilbreite im Verhältnis zum Abstand zwischen den Aufnahmekanälen ist, desto größer ist auch die Anlagefläche des Dichtelements an dem den Schlitz begrenzenden Abdeckelement.

Weiters kann es vorteilhaft sein, wenn das Dichtelement aus einem verformbaren und elastisch selbsttätig rückstellbaren Werkstoff gebildet ist. Dadurch kann stets eine sichere Anlage und ein bevorzugt ausreichend dichtender Abschluss zwischen dem Dichtelement und dem Abdeckelement erzielt werden.

Eine andere Ausführungsform zeichnet sich dadurch aus, dass das Dichtelement an zumindest einem seiner Längsränder, bevorzugt an beiden seiner Längsränder, einen Längswust aufweist. Durch das Vorsehen zumindest eines Längswulstes, welcher eine Querschnittsabmessung aufweist, die größer ist als die Dicke des Dichtelements zwischen seinen beiden Flachseiten, kann so eine noch bessere und sicherere Halterung des Dichtelements in den Aufnahmekanälen erzielt werden. Damit kann ein unbeabsichtigtes Herausziehen der Längsränder des Dichtelements aus dem Aufnahmekanal oder den Aufnahmekanälen des Profilkörpers oder der Profilkörper verhindert werden.

Eine weitere Ausbildung sieht vor, dass das Verschlusselement mehrere Rollladenstäbe umfasst, welche Rollladenstäbe gemeinsam mit den beiden Profilkörpern einen Rollladenpanzer bilden. Durch die Kombination der Rollladenstäbe mit den eigenen Profilkörpern kann so eine kompakt zusammengehörige Baueinheit zur Bildung des Verschlusselements geschaffen werden. Weiters kann damit aber auch auf handelsübliche Rollladenstäbe zurückgegriffen werden und es sind lediglich für die Befestigung des Dichtelements die dazu vorgesehenen zusätzlichen Profilkörper mit den darin angeordneten Aufnahmekanälen bereitzustellen.

Eine andere Ausführungsform zeichnet sich dadurch aus, dass das Verschlusselement ein Planen-Element umfasst, und die beiden Profilkörper am Planen-Element angeordnet oder mit diesem verbunden sind. Damit kann auch eine andere Ausbildung des Verschlusselements geschaffen werden. Es ist lediglich das Planen-Element bereit zu stellen, an welchem die beiden Profilkörper zur Halterung des Dichtelements angeordnet und befestigt werden müssen.

Eine weitere bevorzugte Ausführungsform ist dadurch gekennzeichnet, dass der erste Profilkörper und der zweite Profilkörper den gleichen Profilquerschnitt aufweisen. Dadurch kann eine kostengünstige Herstellung der Profilkörper ermöglicht werden. Weiters können aber auch noch Formkosten für die Herstellung der bevorzugt aus einem Hohlprofil gebildeten Profilkörper eingespart werden.

Weiters kann es vorteilhaft sein, wenn jeder der beiden Profilkörper zusätzlich zu seinem Aufnahmekanal mit einem weiteren Aufnahmekanal versehen ist und der Aufnahmekanal und der weitere Aufnahmekanal unmittelbar nebeneinander verlaufend angeordnet sind. Damit kann ein universellerer Einsatz der Profilkörper für die Befestigung des Dichtelements ermöglicht werden.

Eine andere alternative Ausführungsform zeichnet sich dadurch aus, dass die Aufnahmekanäle jeweils mit einem bezüglich von deren Kanalquerschnitt dazu reduzierten Eintrittsquerschnitts ausgebildet sind. Damit kann eine noch bessere und sicherere Halterung der Längsränder des Dichtelements an dem jeweiligen Profilkörper erzielt werden.

Eine weitere mögliche und gegebenenfalls alternative Ausführungsform hat die Merkmale, dass im Querschnitt gesehen, die jeweils einen reduzierten Querschnitt aufweisenden Eintrittsquerschnitte des Aufnahmekanals und des weiteren Aufnahmekanals einander zugewendet ausgerichtet sind. Damit kann eine gerichtete und knickfreie Halterung für jeden der Längsränder des Dichtelements an einem der Profilkörper geschaffen werden.

Eine weitere Ausbildung sieht vor, dass der erste Längsrand des Dichtelements im Aufnahmekanal des ersten Profilkörpers und der zweite Längsrand des Dichtelements im weiteren Aufnahmekanal des zweiten Profilkörpers aufgenommen ist. Dadurch kann ein gleichmäßigerer bogenförmiger Verlauf des Dichtelements ausgehend von seinem Befestigungsbereich im jeweiligen Aufnahmekanal geschaffen werden.

Eine andere Ausführungsform zeichnet sich dadurch aus, dass das Abdeckelement in seinem Querschnitt gesehen sowie an seiner dem Verschlusselement zugewendeten Innenseite eine bogenförmig gekrümmte Innenwand umfasst, an welcher Innenwand das Dichtelement bei sich in der Verschlussstellung befindlichem Verschlusselement anliegt. Durch das Vorsehen der bogenförmig gekrümmten Innenwand kann so eine gleichmäßigere Anlage des Dichtelements an der von der Innenwand gebildeten Innenfläche erzielt werden. Die bogenförmige Krümmung kann beispielsweise mit einem Radius ausgebildet sein, welcher im Zentrum der Umlenkvorrichtung angeordnet ist.

Eine weitere bevorzugte Ausführungsform ist dadurch gekennzeichnet, dass das Verschlusselement entlang seiner Seitenränder jeweils mehrere in Richtung der Längserstreckung hintereinander angeordnete Gleitelemente umfasst und dass die Gleitelemente jeweils einen Führungskörper mit einer im Bereich der Außenfläche des Verschlusselements angeordneten Außenseite und mit einer im Bereich der Innenfläche des Verschlusselements angeordneten Innenseite umfassen, wobei die am linken Seitenrand befindlichen Gleitelemente im linken Führungsprofil und die am rechten Seitenrand befindlichen Gleitelemente im rechten Führungsprofil geführt sind. Durch das Vorsehen von eigenen Gleitelementen kann so eine noch bessere Führung des Verschlusselements in dem jeweiligen Führungsprofil erzielt werden. Weiters kann damit aber auch bei der Wahl von Rollladenstäben zur Bildung des Verschlusselements ein einfaches Ablängen des Stangenmaterials erfolgen, wobei der seitliche Randabschluss von den Gleitelementen gebildet ist. Die Gleitelemente können auch an den Profilkörpern jeweils in deren Endbereich angeordnet werden.

Eine weitere Ausbildung sieht vor, dass die Gleitelemente jeweils an ihrem Führungskörper, insbesondere an ihrer Außenseite, mit einer Führungsnase versehen sind, und die Führungsnasen der Gleitelemente in dem jeweiligen Führungsprofil ausschließlich in Längsrichtung des Führungsprofils in einem Führungskanal zwangsgeführt sind und eine Bewegung der Gleitelemente abweichend von der zwangsgeführten Längsführung, insbesondere in Richtung auf das jeweils gegenüberliegend angeordnete Führungsprofil, verhindert ist. Damit kann ein Herausziehen der Gleitelemente aus dem jeweiligen Führungskanal des Führungsprofils bzw. der Führungsschiene verhindert werden. So kann auch bei nicht eigensteifen Verschlusselementen, wie z.B. bei der Verwendung eines Planen-Elements ein Einbruchsschutz erzielt werden.

Eine weitere bevorzugte Ausführungsform ist dadurch gekennzeichnet, dass das Gleitelement einen in paralleler Richtung bezüglich des Planen-Elements ausgerichtete Halteansatz sowie mehrere von diesem abstehende Fortsätze umfasst und die abstehenden Fortsätze zur Befestigung des Gleitelements am Planen-Element in dazu passend angeordnete Löcher im Planen-Element eingesetzt sind und dass auf der dem Halteansatz gegenüberliegenden Seite des Planen-Elements eine Halteplatte vorgesehen ist, welche eine der Anzahl an Fortsätzen entsprechende Anzahl an Aufnahmeöffnungen enthält und die Fortsätze in die Aufnahmeöffnungen eingesetzt sind. Damit kann durch Vorsehen von Löchern im Planen-Element in Kombination mit den diese durchragenden Fortsätze eine formschlüssige Anbindung der Halteelemente am Seitenrand des Planen-Elements erzielt werden.

Eine andere mögliche Ausbildung sieht vor, dass das Gleitelement einen Befestigungskanalaufweist, in welchem Befestigungskanal ein entlang des Seitenrandes des Planen-Elements befindlicher Keder aufgenommen ist. Damit kann bei Verwendung eines Planen-Elements zur Bildung des Verschlusselements eine formschlüssige Befestigung der Gleitelemente am jeweiligen Planen-Element erfolgen.

Eine andere alternative Ausführungsform zeichnet sich dadurch aus, dass im Führungsprofil mehrere in Abstand sowie in Richtung der Längserstreckung hintereinander angeordnete Durchgangslöcher angeordnet sind. Damit kann die gesamte Baueinheit der Verschlussanordnung ohne Zuhilfenahme einer zusätzlichen Bohrschablone am Fahrzeugaufbau befestigt werden. Es können somit die Führungsprofile oder Führungsschienen selbst bereits als Bohrschablone verwendet werden. Damit kann ein einheitliches Bohrbild und eine sichere, vorausbestimmbare Befestigung und Montage erfolgen.

Weiters kann es vorteilhaft sein, wenn die Umlenkvorrichtung im Bereich jedes Seitenrandes des Verschlusselements ein radförmig ausgebildetes Antriebsorgan mit mehreren in radialer Richtung vorragend ausgebildeten Antriebselementen aufweist und die beiden Antriebsorgane mittels einer gemeinsamen Antriebswelle miteinander in Antriebsverbindung stehen und die Antriebswelle mit einem Antriebsmittel in Antriebsverbindung steht. Durch das beidseitige Vorsehen eines rad- oder scheibenförmig ausgebildeten Antriebsorgans und die Antriebsverbindung zwischen den beiden Antriebsorganen mittels einer gemeinsamen Antriebswelle kann so auch bei Verschlusselementen mit größerer Breite eine sichere gleichmäßige Verstellbewegung zwischen der Öffnungsstellung und der Verschlussstellung erzielt werden. Weiters kann damit auch eine Verschiebung und Schrägstellung des Verschlusselements zwischen den Führungsschienen oder Führungsprofilen verhindert werden.

Eine andere Ausführungsform zeichnet sich dadurch aus, dass die Umlenkvorrichtung weiters im Bereich jedes Seitenrandes des Verschlusselements ein Führungselement aufweist, welches Führungselement in radialer Richtung vom radförmig ausgebildeten Antriebsorgan distanziert angeordnet ist und im Umlenkabschnitt zwischen dem Führungselement und dem Antriebsorgan ein Kanal zum Hindurchführen der in Richtung der Längserstreckung des Verschlusselements hintereinander angeordneten Gleitelemente ausgebildet ist. Dadurch kann ein Abheben des Verschlusselements von den Antriebsorganen und den an diesen angeordneten oder ausgebildeten Antriebselementen verhindert werden. Darüber hinaus kann so aber auch ein Einbruchschutz gegen unberechtigte Entnahme geschaffen werden.

Eine weitere mögliche Ausführungsform hat die Merkmale, dass die Gleitelemente jeweils mit einer Vertiefung oder einem Durchbruch versehen sind, welche Vertiefung oder welcher Durchbruch sich ausgehend von der der Innenfläche des Verschlusselements zugewendeten Innenseite in Richtung auf die Außenseite erstreckt und dass im Umlenkabschnitt jeweils eines der Antriebselemente des radförmig ausgebildeten Antriebsorgans in eine der Vertiefungen oder in einen der Durchbrüche eingreift. Damit kann eine sichere Übertragung des Antriebsmoments ausgehend von den Antriebselementen des Antriebsorgans hin auf das Verschlusselement geschaffen werden.

Eine weitere Ausbildung sieht vor, dass eine Sperrvorrichtung vorgesehen ist, mittels welcher Sperrvorrichtung das Verschlusselement in seiner die Öffnung verschließenden Verschlussstellung in einer Sperrstellung verriegelt gehalten ist und dass die Sperrvorrichtung einen Sperrriegel sowie ein in einem Gehäuse angeordnetes Verriegelungselement und ein damit in Wirkverbindung stehenden, mittels elektrischer Energie betriebenes Stellglied umfasst, und in einer Verriegelungsstellung der Sperrvorrichtung das Verriegelungselement mit dem Sperrriegel in Eingriff steht, und dass bei Wegfall der elektrischen Energie der Sperrriegel mittels eines manuell betätigbaren Stellelements in eine Entriegelungsstellung umstellbar ist, in welcher der Sperrriegel außer Eingriff mit dem Verriegelungselement ist. Damit kann einerseits ein sicherer Verschluss gewährleistet werden und andererseits auch in einem Notfall bei nicht vorhandener elektrischer Energie ein Zugang durch manuelles Entriegeln geschaffen werden. So ist eine Kombination eines ansonsten mittels elektrischer Energie betriebenen Stellgliedes für das Verriegelungselement mit einem bedarfsweise manuell betätigbaren Sperrriegel einfach und sicher möglich.

Schließlich kann eine Ausführungsvariante vorteilhaft sein, bei welcher der Sperrriegel an der Innenfläche des Verschlusselements angeordnet und in paralleler Richtung bezüglich der Innenfläche des Verschlusselements sowie in senkrechter Richtung bezüglich der Längserstreckung der Führungsprofile relativ verstellbar geführt ist. So kann durch eine einfache manuelle Verstellbewegung des Sperrriegels, z.B. mittels einer durchgeführten Schwenkbewegung eines Stellelements und Übertragung der Schwenkbewegung auf eine Schiebebewegung, die Entriegelung und damit eine Notöffnung durchgeführt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Kraftfahrzeug mit mehreren Verschlussanordnungen, in Seitenansicht und vereinfachter stilisierter Darstellung;
- Fig. 2: eine mögliche Ausbildung einer Verschlussanordnung mit Rollladenstäben zur Bildung des Verschlusselements, in schaubildlicher Darstellung, teilweise geschnitten;
- Fig. 3: ein Detail des Umlenkabschnitts mit dem in der Verschlussstellung befindlichen Dichtelement, in Ansicht geschnitten gemäß den Linien III-III in Fig. 4;
- Fig. 4: ein weiteres Detail des Umlenkabschnitts mit dem mit den Gleitelementen in Eingriff stehenden Antriebsorgan, in schaubildlicher Darstellung;
- Fig. 5: eine mögliche Ausbildung des Gleitelements, welches zum Einsetzen in das Hohlprofil eines Rollladenstabs ausgebildet ist;
- Fig. 6: eine andere Ausbildung eines Gleitelements mit einem Führungsprofil, welches Gleitelement randseitig an einem Planen-Element zur Führung und Halterung desselben in den Führungsprofilen angebracht ist, in Ansicht auf den Aufnahmekanal;
- Fig. 7: das Gleitelement nach Fig. 6, jedoch ohne Führungsprofil, schaubildlicher Darstellung;
- Fig. 8: eine weitere mögliche Ausbildung eines Gleitelements, welches randseitig an einem Planen-Element zur Führung und Halterung desselben in den Führungsprofilen angebracht ist, in Ansicht;
- Fig. 9: einen Teil der Sperrvorrichtung zur manuellen Entriegelung, in Innenansicht auf das Verschlusselement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

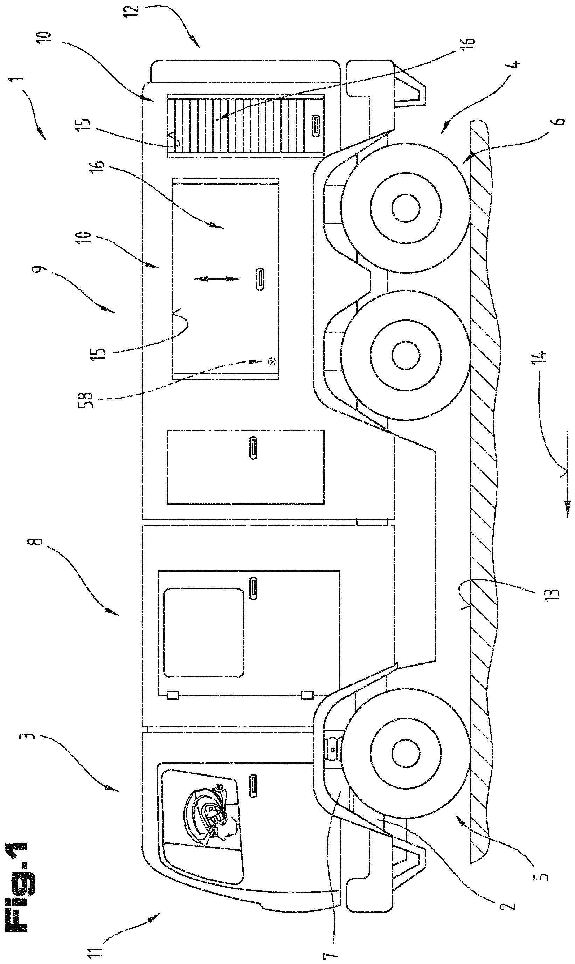

In der Fig. 1 ist ein Kraftfahrzeug 1 in einer vereinfachten Seitenansicht gezeigt, wobei unter dem Begriff "Kraftfahrzeug" jegliches Fahrzeug verstanden wird, welches zumindest eine Antriebsquelle zu dessen Fortbewegung umfasst. Das Kraftfahrzeug 1 kann z.B. als Einsatzfahrzeug, Feuerwehrfahrzeug, Feuerlöschfahrzeug, Kommunalfahrzeug oder Transportfahrzeug dienen oder dazu ausgebildet sein. Bevorzugt kann das Kraftfahrzeug 1 als Kleinbus, Bus, Klein-Lastkraftwagen, Lastkraftwagen oder dergleichen ausgebildet sein.

Im vorliegenden Ausführungsbeispiel ist das Kraftfahrzeug 1 als Lastkraftwagen ausgebildet und kann ein Fahrgestell 2, eine frontseitig daran angeordnete Fahrerkabine 3 sowie ein Fahrwerk 4 mit zumindest einer Vorderradanordnung 5 und zumindest einer Hinterradanordnung 6 umfassen. Jede der Radanordnungen 5, 6 kann beidseits Einzelräder oder aber auch Zwillingsräder aufweisen. Es wäre auch noch möglich, bei jeder der Radanordnungen 5, 6 eine oder auch mehrere Achsen vorzusehen. Zum Antrieb kann ein schematisch angedeutetes Antriebsaggregat 7 dienen.

Als Fahrgestell 2, Rahmen, Chassis oder Untergestell werden grundsätzliche die tragenden Teile von Fahrzeugen, insbesondere von Kraftfahrzeugen 1 bezeichnet. Die tragenden Teile haben die Funktion, den Antrieb, die Karosserie und gegebenenfalls die Nutzlast zu tragen.

Als Fahrwerk 4 bezeichnet man grundsätzlich die Gesamtheit aller Teile eines Landfahrzeugs, die der Verbindung des Fahrgestells 2 über die Räder zur Fahrbahn dienen. Das Fahrwerk 4 zählt unter anderem zu den Hauptbestandteilen des Kraftfahrzeugs 1. Dieses kann Räder, Radträger, Radlager, Bremsen, Radaufhängungen, Fahrschemel, Federung inkl. Stabilisator, Dämpfung und Lenkung umfassen.

In Fahrtrichtung 14 gesehen, kann z.B. nachfolgend an die Fahrerkabine 3 - also in Richtung auf das Heck - zumindest ein Kabinenmodul 8 vorgesehen sein. Die übliche Fahrtrichtung 14 ist mit einem Pfeil in einer Vorwärtsbewegung des Kraftfahrzeugs 1 eingetragen. Zur Dämpfung der Fahrerkabine 3 sowie gegebenenfalls des Kabinenmoduls 8 können zusätzlich noch, jedoch nicht näher dargestellte Dämpfungs- und/oder Federelemente vorgesehen sein.

Nachfolgend an das Kabinenmodul 8 ist hier ein Fahrzeugaufbau 9 angeordnet oder vorgesehen. Darin können die unterschiedlichsten Aufnahmefächer und/oder Aufnahmeboxen vorgesehen sein, um so im Falle eines Einsatzes die dafür notwendigen Ausrüstungsgegenstände, Werkzeuge und vieles mehr geordnet mitführen zu können. Dazu können die Aufnahmefächer und/oder Aufnahmeboxen für den Transport mittels einer Verschlussanordnung 10 verschlossen und bei Bedarf zugänglich gemacht werden. Mögliche Ausbildungen der Verschlussanordnung 10 sowie Details derselben werden nachfolgend noch näher beschrieben und gezeigt. Auf die Darstellung sonstiger Einheiten oder Bauteilkomponenten wurde der besseren Übersichtlichkeit halber verzichtet.

Es sei angemerkt, dass die Verschlussanordnung 10 sowie mögliche Varianten derselben nicht nur bei dem Kraftfahrzeug 1, sondern auch bei Anhängern, Wechselmodulen, Containern oder dergleichen eingesetzt werden kann. Es kann auch eine mögliche Kombination von mehreren unterschiedlich ausgebildeten Verschlussanordnungen 10 an ein und demselben Kraftfahrzeug 1, Anhänger, Wechselmodul, Container oder dergleichen eingesetzt werden.

Das Kraftfahrzeug 1 weist eine Frontseite 11 und eine in Fahrzeuglängsrichtung davon distanzierte Heckseite 12 auf, wodurch eine Baulänge oder Fahrzeuglänge definiert ist. Weiters ist hier noch gezeigt, dass das Kraftfahrzeug 1 auf einer bevorzugt horizontal ausgerichteten Aufstandsfläche 13 aufgestellt bzw. darauf abgestützt ist.

Die Verschlussanordnung 10 dient dazu, jene am oder im Kraftfahrzeug 1 vorgesehene oder ausgebildete zumindest eine Öffnung 15 grundsätzlich für einen Zugang oder einen Zugriff zu verschließen und bei Bedarf und Verlagerung eines Verschlusselements 16 der Verschlussanordnung 10 den Zugang oder den Zugriff in die Öffnung 15 zu ermöglichen. Das Verschlusselement 16 ist seinerseits derart ausgebildet, dass dieses von einer die Öffnung 15 verschließenden Verschlussstellung in eine die Öffnung 15 freigebende Öffnungsstellung verstellbar oder verlagerbar ist. Im Umgrenzungsbereich der Öffnung 15 befindet sich das Verschlusselement 16 in einer gestreckten, bevorzugt überwiegend geradlinigen oder ebenflächigen Lage oder Stellung. In seiner Öffnungsstellung und damit die Öffnung 15 zumindest oder vollständig freigebenden Stellung ist das Verschlusselement 16 in einer aufgewickelten Stellung angeordnet, wie dies bei einem Rollladen oder einem Rollo allgemein bekannt ist. Mögliche Verstellrichtungen des Verschlusselements 16 sind mit einem Doppelpfeil angedeutet. Die näheren Details und Ausbildungsmöglichkeiten der Verschlussanordnung 10 werden nachfolgend noch näher erläutert.

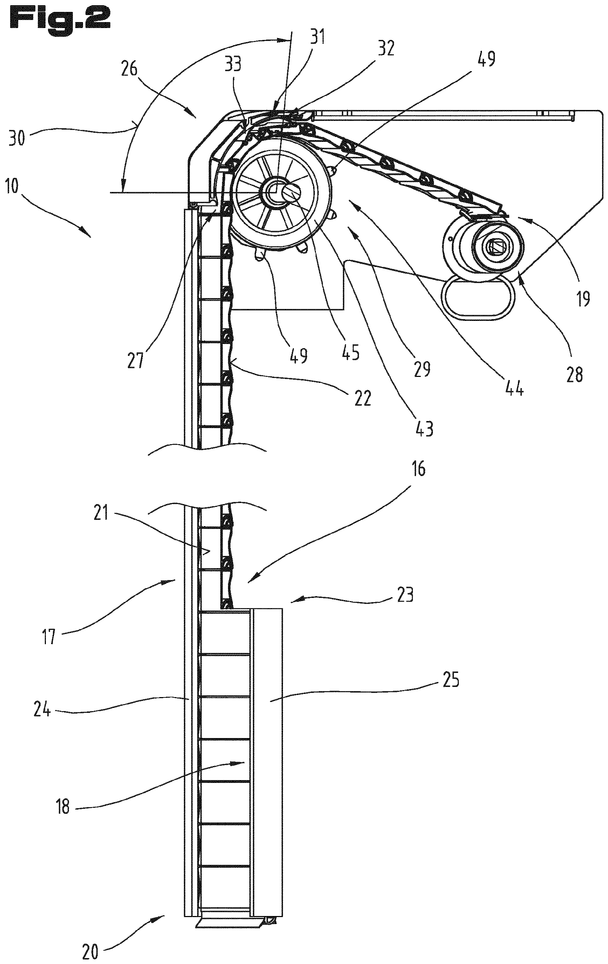

In den Fig. 2 bis 9 ist die die Verschlussanordnung 10 bildende und bevorzugt zusammengehörige Baueinheit in deren Einbauzustand vor dem Anbringen im Bereich der Öffnung 15 sowie einzelne mögliche Detailausbildungen derselben in möglichen Ausführungsvarianten gezeigt.

Wie aus den Fig. 2 bis 4 zu ersehen ist, weist das Verschlusselement 16 seinerseits einen linken Seitenrand 17, einen rechten Seitenrand 18, einen ersten Querrand 19 und einen in Richtung der Längserstreckung des Verschlusselements 16 davon distanziert angeordneten zweiten Querrand 20 auf und ist damit umfänglich und randseitig begrenzt. Eine Außenfläche 21 des Verschlusselements 16 ist von der einem Aufnahmeraum abgewendeten Seite ausgebildet, wobei eine Innenfläche 22 dem abzudeckenden oder abzuschließenden Aufnahmeraum oder dem Innenraum zugewendet ist. Das Verschlusselement 16 kann von einer die Öffnung 15 verschließenden Verschlussstellung in eine die Öffnung 15 freigebende Öffnungsstellung verstellt werden. Dies kann manuell und/oder mittels einer Antriebsvorrichtung erfolgen.

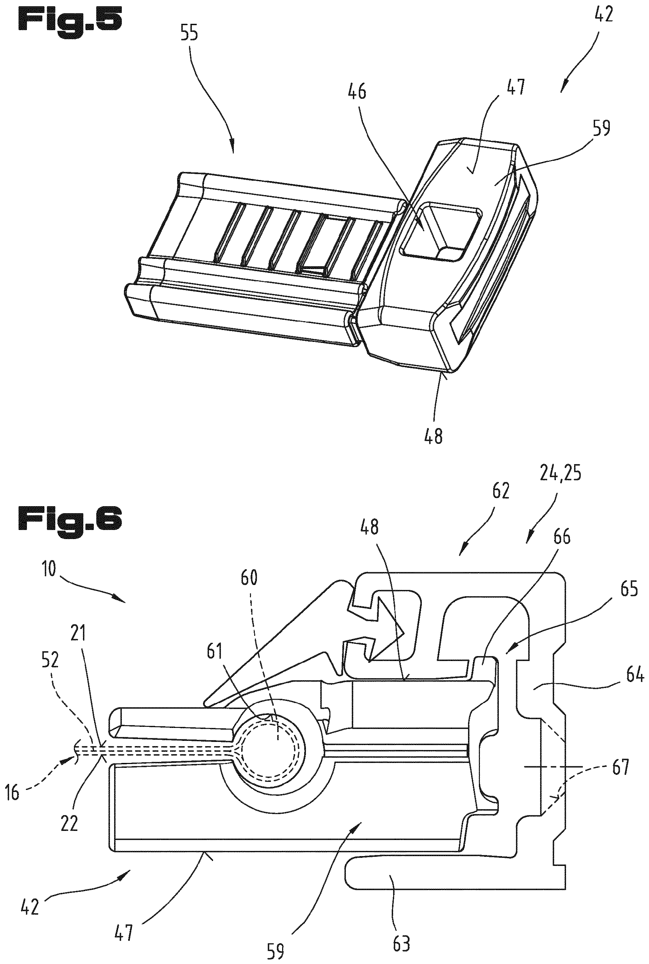

Zur beidseitigen Führung des Verschlusselements 16 im Randbereich oder in einem Randabschnitt der Öffnung 15 kann noch eine Führungsanordnung 23 mit einem linken Führungsprofil 24 und einem rechten Führungsprofil 25 vorgesehen sein. Die Führungsprofile 24, 25 dienen dazu, die beiden Seitenränder 17, 18 zumindest in Richtung der Längserstreckung der Führungsprofile 24, 25 entlang der Begrenzungsränder der Öffnung 15 zu führen. Zusätzlich kann auch noch eine in Querrichtung wirkende Führung ausgebildet sein, um den gestreckten Abstand des Verschlusselements 16 zwischen den Seitenrändern 17, 18 unverändert beibehalten zu können. Eine mögliche Ausbildung der Führung ist in der nachfolgenden Fig. 6 gezeigt und beschrieben. Damit kann bei biegeschlaffen Werkstoffen zur Bildung des Verschlusselements 16, wie z.B. bei Planen, Stoffen, Geweben, Tüchern oder dergleichen, ein Herausziehen zumindest eines der Seitenränder 17, 18 aus seinem Führungsprofil 24 und/oder 25 verhindert werden.

Weiters und zusätzlich wäre es noch möglich, in den beiden Führungsprofilen 24 und 25, welche auch als Führungsschienen bezeichnet werden können, mehrere in Abstand sowie in Richtung der Längserstreckung hintereinander angeordnete Durchgangslöcher 67 oder Durchgangsbohrungen vorzusehen, um so die Montage am oder im Fahrzeugaufbau 9 zu erleichtern. Eines der Durchgangslöcher 67 oder der Durchgangsbohrungen ist in der nachfolgenden Fig. 6 dargestellt, wobei die Durchgangslöcher 67 in einer vorbestimmten Lochrasterteilung angeordnet werden können. Damit kann ein rascherer Einbau ohne die Verwendung einer eigenen Bohrschablone ermöglicht werden. Weiters könnte z.B. die Montage auch mittels selbstschneidender Schrauben durchgeführt werden.

Im Bereich der hier oberen Begrenzung der Öffnung 15 kann noch ein Abdeckelement 26 vorgesehen sein, welches sich zumindest zwischen dem linken Führungsprofil 24 und dem rechten Führungsprofil 25 erstreckt. Damit kann die Öffnung 15 randseitig an einem ersten oberen Öffnungsrand begrenzt werden. Zwischen dem Abdeckelement 26 und seiner der Außenfläche 21 des Verschlusselements 16 zugewendeten Seite ist einen Schlitz 27 definiert. Der Schlitz 27 ist durch einen Abstand zwischen der Außenfläche 21 des Verschlusselements 16 und einem Bauteil der Verschlussanordnung 10 oder dem Fahrzeugaufbau 9 sowie der Breite des Verschlusselements 16 oder dem Querabstand zwischen den beiden Führungsprofilen 24 und 25 definiert. Es ist hier vorgesehen, dass dieser Schlitz 27 soweit abzuschließen oder abzudichten ist, dass bei sich in der Verschlussstellung befindlichem Verschlusselement 16 ein Zutritt von Staub, Schmutz, Wasser oder dergleichen zu einem überwiegenden Anteil oder bevorzugt vollständig unterbunden ist.

Um das Verschlusselement 16 in seiner die Öffnung 15 freigebenden Öffnungsstellung platzsparend anordnen zu können, ist eine Wickelvorrichtung 28 für das Verschlusselement 16 vorgesehen. Da aus dem Stand der Technik verschiedenste Möglichkeiten zur Ausbildung der Wickelvorrichtung 28 bekannt sind, wird darauf nicht mehr näher eingegangen. Der erste Querrand 19 des Verschlusselements 16 steht dazu mit der Wickelvorrichtung 28 in Antriebsverbindung, um das Verschlusselement 16 in seiner Öffnungsstellung an der Wickelvorrichtung 28 zu einem überwiegenden Anteil seiner Längserstreckung daran aufwickeln zu können. Zumeist ist dazu eine Federwalze oder sind dazu Wickelelemente vorgesehen.

Weiters umfasst die Verschlussanordnung 10 auch noch eine Umlenkvorrichtung 29, welche für das Verschlusselement 16 einen Umlenkabschnitt 30 bildet. Der Umlenkabschnitt 30 stellt jenen Ablenkwinkel oder Umlenkwinkel dar oder ist durch diesen definiert, welcher von den beidseits der Umlenkvorrichtung 29 befindlichen Teilabschnitten des Verschlusselements 16 eingeschlossen ist. Mittels der Umlenkvorrichtung 29 kann hier das in der Führungsanordnung 23 geführte Verschlusselement 16 in seinem Längsverlauf abgelenkt und hin in Richtung auf die Wickelvorrichtung 28 umgelenkt werden. Die Wickelvorrichtung 28 ist zumeist innerhalb oder hinterhalb der Öffnung 15 und somit im Aufnahmeraum angeordnet.

Wie bereits zuvor kurz angedeutet, soll der Schlitz 27 zumindest in der Verschlussstellung des Verschlusselements 16 auch noch verschlossen und/oder abgedichtet werden. Dazu ist ein Dichtelement 31 vorgesehen, welches im Bereich der Außenfläche 21 des Verschlusselements 16 an diesem angeordnet oder ausgebildet ist. Das Dichtelement 31 erstreckt sich zumindest zwischen dem linken Seitenrand 17 und dem rechten Seitenrand 18 des Verschlusselements 16 oder das Dichtelement 31 erstreckt auch zwischen dem linken Führungsprofil 24 und dem rechten Führungsprofil 25. Darüber hinaus liegt es bei sich in der Verschlussstellung befindlichem Verschlusselement 16 innenseitig am Abdeckelement 26 an. Das Dichtelement 31 hat den überwiegenden Zweck, einen Zutritt von Staub, Schmutz, Feuchtigkeit sowie gegebenenfalls von Wasser in den hinterhalb der Öffnung 15 befindlichen Aufnahmeraum des Kraftfahrzeugs 1 zu minimieren oder gänzlich zu unterbinden. Es kann auch noch dazu dienen, den Wärmeverlust, insbesondere bei niedrigen Außentemperaturen, aus dem Innenraum hin zur Umgebung zu senken. Es kann aber auch bei höheren Außentemperaturen gegenüber dem Aufnahmeraum ein Eintritt von Wärme in den Aufnahmeraum minimiert werden. So kann das Dichtelement 31 auch als Abschlusselement oder Verschlusselement bezeichnet werden.

Das Dichtelement 31 ist als Flachprofil ausgebildet und in Richtung seiner Längserstreckung gesehen beidseitig von einem ersten Längsrand 32 und einem zweiten Längsrand 33 in seiner Flachprofilbreite 34 begrenzt. Bevorzugt ist das Dichtelement 31 aus einem verformbaren und elastisch selbsttätig rückstellbaren Werkstoff gebildet. Dabei kann es sich um ein Kunststoffmaterial, einen Gummi, ein Elastomer oder dergleichen handeln. Weiters kann das Dichtelement 31 an zumindest einem seiner Längsränder 32, 33, bevorzugt jedoch an beiden seiner Längsränder 32, 33, einen Längswulst 35 aufweisen. Der Längswulst 35 oder die Längswülste 35 weist/weisen bevorzugt einen Kreisquerschnitt auf. Der Durchmesser ist größer ausgebildet als die Dicke des Dichtelements 31 zwischen seinen beiden Flachseiten.

Zur Halterung oder Befestigung des Dichtelements 31 am Verschlusselement 16 kann das Verschlusselement 16 einen ersten Profilkörper 36 und einen zweiten Profilkörper 37 umfassen. Bevorzugt erstrecken sich auch die beiden Profilkörper 36, 37 zwischen dem linken Seitenrand 17 und dem rechten Seitenrand 18 des Verschlusselements 16 oder annähernd zwischen dem linken Seitenrand 17 und dem rechten Seitenrand 18. Weiters können die beiden Profilkörper 36, 37 in Richtung der Längserstreckung des Verschlusselements 16 zwischen seinen beiden Querrändern 19, 20 auch noch gelenkig verbunden sein. Dies kann auf direktem Weg unmittelbar zwischen den beiden Profilkörpern 36, 37 erfolgen oder gegebenenfalls unter Zwischenschaltung eines zusätzlichen Elements, wie dies noch nachfolgend beschrieben wird. Die gegenseitige Verbindung kann entweder mittels eines in einem Haltekanal aufgenommenen Haltestegs oder auch mittels des Verschlusselements 16 selbst erfolgen, wenn dieses z.B. durch ein flächiges Bauteil, wie z.B. eine Plane gebildet ist.

Zur Aufnahme jeweils eines der beiden Längsränder 32, 33, insbesondere die dort angeordneten oder ausgebildeten Längswülste 35, weist jeder der beiden Profilkörper 36, 37 einen Aufnahmekanal 38 auf oder ist mit diesem versehen. Der Aufnahmekanal 38 ist in paralleler Richtung bezüglich der Längserstreckung des Profilkörpers 36, 37 ausgerichtet und erstreckt sich in Richtung auf die Innenfläche 22 des Verschlusselements 16 in den jeweiligen Profilkörper 36, 37 hinein.

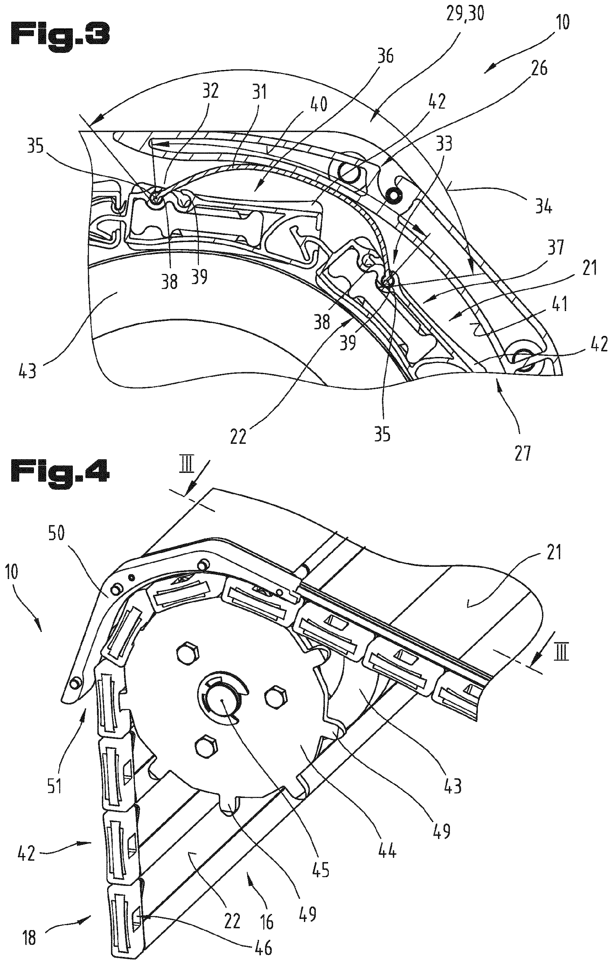

Im vorliegenden Ausführungsbeispiel weist der erste Profilkörper 36 und der zweite Profilkörper 37 den gleichen Profilquerschnitt auf. Weiters ist noch vorgesehen, dass jeder der beiden Profilkörper 36, 37 zusätzlich zu seinem Aufnahmekanal 38 mit zumindest einem weiteren Aufnahmekanal 39 oder mehreren Aufnahmekanälen 39 versehen ist. Der Aufnahmekanal 38 und der weitere Aufnahmekanal 39 sind unmittelbar nebeneinander verlaufend angeordnet. Sind die beiden Längsränder 32, 33 mit den Längswülste 35 versehen, sind auch die Aufnahmekanäle 38, 39 mit einem dazu passenden Querschnitt, insbesondere einem kreisförmigen Kanalquerschnitt auszubilden. Zumeist ist eine Dicke des als Flachprofil ausgebildeten Dichtelements 31 geringer als eine Außenabmessung des Längswulstes 35 in gleicher Raumrichtung. Zur Erzielung einer sicheren Halterung des Dichtelements 31 mit seinen Längswülsten 35 im Bereich der beiden Längsränder 32, 33, kann ein Eintrittsquerschnitt in den Aufnahmekanal 38, 39 bezüglich des kreisförmig ausgebildeten Kanalquerschnitts dazu reduziert ausgebildet sein. Weiters können die beiden unmittelbar nebeneinander angeordneten Eintrittsquerschnitte in jeden der Aufnahmekanäle 38, 39 einander zugewendet ausgerichtet sein. Dies ist am besten aus der Fig. 3 zu ersehen.

Damit wird es möglich, den ersten Längsrand 32 des Dichtelements 31 im Aufnahmekanal 38 des ersten Profilkörpers 36 und den zweiten Längsrand 33 des Dichtelements 31 im weiteren Aufnahmekanal 39 des zweiten Profilkörpers 37 aufzunehmen und dabei die notwendige und ausreichend hohe Vorspannung im Dichtelement 31 auszubilden, damit eine ausreichende und sichere Abdichtung des Schlitzes 27 erzielt werden kann.

Es wäre aber auch noch möglich, in jedem der Profilkörper 36, 37 nur einen einzigen Aufnahmekanal 38 anzuordnen oder auszubilden und darin jeweils einen der Längsränder 32 oder 33 und/oder die dort befindlichen Längswülste 35 aufzunehmen und zu halten.

Um einen Überstand des Dichtelements 31 über die Außenfläche 21 des Verschlusselements 16 trotz der Befestigung oder Halterung seiner beiden Längsränder 32, 33 an den beiden Profilkörpern 36, 37 zu erzielen, ist bei ebenflächiger Lage der beiden Profilkörper 36, 37 die Flachprofilbreite 34 des Dichtelements 31 größer oder breiter auszubilden als ein Abstand 40 zwischen dem Aufnahmekanal 38 des ersten Profilkörpers 36 und dem Aufnahmekanal 38 des zweiten Profilkörpers 37. Dies gilt dann, wenn in jedem der Profilkörper 36, 37 nur ein einziger Aufnahmekanal 38 angeordnet ist. Sind bei jedem der Profilkörper 36, 37 sowohl der Aufnahmekanal 38 als auch der weitere Aufnahmekanal 39 vorgesehen, ist der Abstand 40 zwischen jenen Kanälen zu ermitteln, in welche jeweils einer der Längsränder 32, 33 eingesetzt und aufgenommen werden soll.

Die Flachprofilbreite 34 des Dichtelements 31 bezüglich des Abstandes 40 zwischen dem Aufnahmekanal 38 des ersten Profilkörpers 36 und dem Aufnahmekanal 38 des zweiten Profilkörpers 37 soll einen Wert aufweisen, damit eine ausreichende Vorspannung des Dichtelements 31 gegeben ist und der Schlitz 27 sauber mit Druck verschlossen wird.

Je größer oder höher der Wert gewählt wird, kann damit der Überstand des vorgewölbten Dichtelements 31 über die beiden Profilkörper 36, 37 festgelegt werden und damit eine Anpassung an die Breite oder Abmessung des abzudeckenden Schlitzes 27 erfolgen. Das über die beiden Profilkörper 36, 37 überstehende Dichtelement 31 soll auf alle Fälle am Abdeckelement 26 anliegen. Durch das im Querschnitt gesehen bogenförmige Vorragen des Dichtelements 31 zwischen seinen beiden Längsrändern 32, 33 und die durchgehend glatte Ausbildung kann eine sichere Anlage am Abdeckelement 26 und vor allem eine verhakungsfreie Verstellbewegung im Schlitz 27 erzielt werden.

Damit im Umlenkbereich oder dem Umlenkabschnitt 30 der Umlenkvorrichtung 29 eine in etwa gleiche Breite oder Dicke des Schlitzes 27 in radialer Richtung gesehen erzielt werden kann, soll das Abdeckelement 26 in seinem Querschnitt gesehen sowie an seiner dem Verschlusselement 16 zugewendeten Innenseite eine bogenförmig gekrümmte, insbesondere eine kreisbogenförmig gekrümmte, Innenwand 41 umfassen oder aufweisen. An dieser Innenwand 41 liegt das Dichtelement 31 bei sich in der Verschlussstellung befindlichem Verschlusselement 16 daran an. Das Abdeckelement 26 kann aus einem Hohlprofil gebildet sein und z.B. am Fahrzeugaufbau 9 oder einem Bauteil der Verschlussanordnung 10 befestigt werden. Weiters kann das Abdeckelement 26 auch noch dazu dienen, die Umlenkvorrichtung 29, insbesondere die beidseits der Öffnung 15 angeordneten Antriebsorgane 44 und/oder Umlenkräder 43, einerseits auf Distanz zu halten und gegebenenfalls auch noch die Umlenkvorrichtung 29 links und rechts miteinander zu verbinden.

Das Verschlusselement 16 kann unterschiedlichst ausgebildet sein und zusätzlich zu den Profilkörpern 36, 37 auch in einer möglichen Ausführungsvariante noch mehrere Rollladenstäbe umfassen. Die Profilkörper 36, 37 bilden in diesem Fall gemeinsam mit den Rollladenstäben einen in bekannter Weise bezeichneten Rollladenpanzer aus. So können in Richtung der Längserstreckung des Verschlusselements 16 gesehen beidseits der beiden Profilkörper 36, 37 mehrere der Rollladenstäbe angeordnet und auch untereinander gelenkig miteinander verbunden sein. Je nach Breite der Profilkörper 36, 37 oder der Rollladenstäbe wäre es auch noch möglich, zwischen diesen auch noch einen Rollladenstab oder mehrere Rollladenstäbe anzuordnen. Damit wären die beiden Profilkörper 36, 37 nicht unmittelbar hintereinander angeordnet.

Unabhängig davon könnte aber das Verschlusselement 16 auch ein aus einem flächigen Bauteil gebildetes Planen-Element 52 umfassen, an welchem die Profilkörper 36 und 37 angeordnet oder daran befestigt sind. So könnte auch bei dieser Ausbildung ein aufrollbares Verschlusselement 16 geschaffen werden, bei welchem ein Verschluss oder Abschluss des Schlitzes 27 mit dem an den Profilkörpern 36 und 37 gehaltenen Dichtelement 31 möglich ist.

Die Führung des Verschlusselements 16 im Bereich der Seitenränder der Öffnung 15 sowie an oder in den Führungsprofilen 24 und 25 kann mittels mehrerer entlang der Seitenränder 17, 18 des Verschlusselements 16 hintereinander angeordneter Gleitelemente 42 erfolgen. Je nach Ausführungsform des Verschlusselements 16 als Rollladenpanzer oder als Planen-Element 52 ist die Ausbildung und Gestaltung der Gleitelemente 42 zu wählen. Die Gleitelemente 42 können nicht nur an den Rollladenstäben oder dem Planen-Element 52 angeordnet werden, sondern auch an beiden Endbereichen der Profilkörper 36, 37. Die am linken Seitenrand 17 befindlichen Gleitelemente 42 sind im linken Führungsprofil 24 und die am rechten Seitenrand 18 befindlichen Gleitelemente 42 sind im rechten Führungsprofil 25 geführt.

Durch das Vorsehen von eigenen Gleitelementen 42 können die Rollladenstäbe einfach abgelängt werden. Zumeist sind die Rollladenstäbe als auch die Profilkörper 36, 37 als Hohlprofile ausgebildet, wodurch es einfach möglich ist, die Gleitelemente 42 zumindest teilweise in den jeweiligen Hohlprofilkörper (Rollladenstab, Profilkörper 36, 37) einzuschieben. Das dafür vorgesehene Gleitelement 42 ist in der Fig. 5 gezeigt.

Die Umlenkvorrichtung 29 für das Verschlusselement 16 kann zusätzlich zu Umlenkrädern 43 oder Umlenkscheiben im Bereich jedes Seitenrandes 17, 18 des Verschlusselements 16 jeweils ein radförmig ausgebildetes Antriebsorgan 44 umfassen. Um einen gleichmäßigen Antrieb und Umlenkvorgang des Verschlusselements 16 im Umlenkabschnitt 30 zu erzielen, stehen bevorzugt die beiden Antriebsorgane 44 mittels einer gemeinsamen Antriebswelle 45 miteinander in Antriebsverbindung. Auf die Darstellung eines Antriebsmittels wurde der besseren Übersichtlichkeit halber verzichtet.

Zur Übertragung des Antriebsmoments ausgehend von den Antriebsorganen 44 auf das Verschlusselement 16, insbesondere die an diesem sowie den Profilkörpern 36, 37 angeordneten oder befestigten Gleitelemente 42, können die Gleitelemente 42 mit einer Vertiefung 46 oder einem Durchbruch versehen sein. Die Vertiefung 46 oder der Durchbruch erstreckt sich ausgehend von einer der Innenfläche 22 des Verschlusselements 16 zugewendeten Innenseite 47 des Gleitelements 42 in Richtung auf eine Außenseite 48 desselben.

Das in der Fig. 5 dargestellte Gleitelement 42 umfasst einen im jeweiligen Führungsprofil 24, 25 aufgenommenen und in Richtung der Längserstreckung zwangsgeführten Führungskörper 59 sowie einen daran in paralleler Richtung in den jeweiligen Rollladenstab oder Profilkörper 36, 37 einsteckbaren Halteansatz 55. Der Führungskörper 59 ist maßlich so ausgebildet, dass bei im Führungsprofil 24, 25 befindlicher Führungsstellung ein Herausziehen der Gleitelemente 42, insbesondere deren Führungskörper 59, aus einem Führungskanal des Führungsprofils 24, 25 nicht möglich ist.

Jedes der Antriebsorgane 44 ist zur formschlüssigen Übertragung des Antriebsmoments auf die Gleitelemente 42 mit mehreren in radialer Richtung vorragend ausgebildeten Eingriffselementen 49 versehen. In diesem Fall kann das Antriebsorgan 44 auch als Zahnrad oder Kettenrad bezeichnet werden. Der umfängliche Teilungsabstand zwischen den Eingriffselementen 49 ist einer Distanz zwischen den Vertiefungen 46 oder den Durchbrüchen von unmittelbar hintereinander angeordneten Gleitelementen 42 anzupassen. So ist es möglich, dass im Umlenkabschnitt 30 jeweils eines der Eingriffselemente 49 des radförmig oder scheibenförmig ausgebildeten Antriebsorgans 44 in eine der Vertiefungen 46 oder in einen der Durchbrüche eingreift.

Zusätzlich wäre es auch noch möglich, die einzelnen hintereinander angeordneten Gleitelemente 42 auch noch miteinander gelenkig zu verbinden oder zu koppeln. Damit könnte das Anordnen und Befestigen der Gleitelemente 42 an den Längsränder 32, 33 des als Plane ausgebildeten Verschlusselements 16 (Planen-Element 52) erleichtert werden.

Um ein Abheben des Verschlusselements 16 mit seinen Gleitelementen 42 von den radförmig oder scheibenförmig ausgebildeten Antriebsorganen 44, insbesondere den an diesen befindlichen und in Eingriff mit den Gleitelementen 42 stehenden Eingriffselementen 49, zu verhindern, kann die Umlenkvorrichtung 29 weiters im Bereich jedes Seitenrandes 17, 18 des Verschlusselements 16 ein eigenes Führungselement 50 umfassen. Jedes der Führungselemente 50 ist in radialer Richtung vom radförmig ausgebildeten Antriebsorgan 44 distanziert angeordnet und bildet im Umlenkabschnitt 30 zwischen sich und dem Antriebsorgan 44 einen Kanal 51 aus bzw. definiert diesen. In jedem der Kanäle 51 sind in dem von einem Abschnitt eines Kreisbogens gebildeten Umlenkabschnitt 30 die Gleitelemente 42 hindurchgeführt. Damit kann ein Abheben des Verschlusselements 16 mit seinen Gleitelementen 42 und in weiterer Folge ein unberechtigter Zutritt in den hinterhalb der Öffnung befindlichen Aufnahmeraum verhindert werden. Die Führungselemente 50 können auch als Sicherungselemente oder Stützelemente bezeichnet werden.

Wie bereits zuvor beschrieben, können die Seitenränder 17, 18 des Verschlusselements 16, insbesondere wenn dieses einen planenartig ausgebildeten Bauteil (Planen-Element 52) umfasst, mittels der beidseits angeordneten Gleitelemente 42 in einer vorbestimmten und fixen Distanz in den Führungsprofilen 24 und 25 geführt werden. Dazu ist nicht nur eine Führung in Richtung der Längserstreckung des jeweiligen Führungsprofils 24 und 25 vorzusehen, sondern auch eine derart ausgebildete, dass der Querabstand zwischen den entlang jedes Seitenrandes 17, 18 befindlichen Gleitelementen 42 von den Führungsprofilen 24 und 25 konstant gleich gehalten ist.

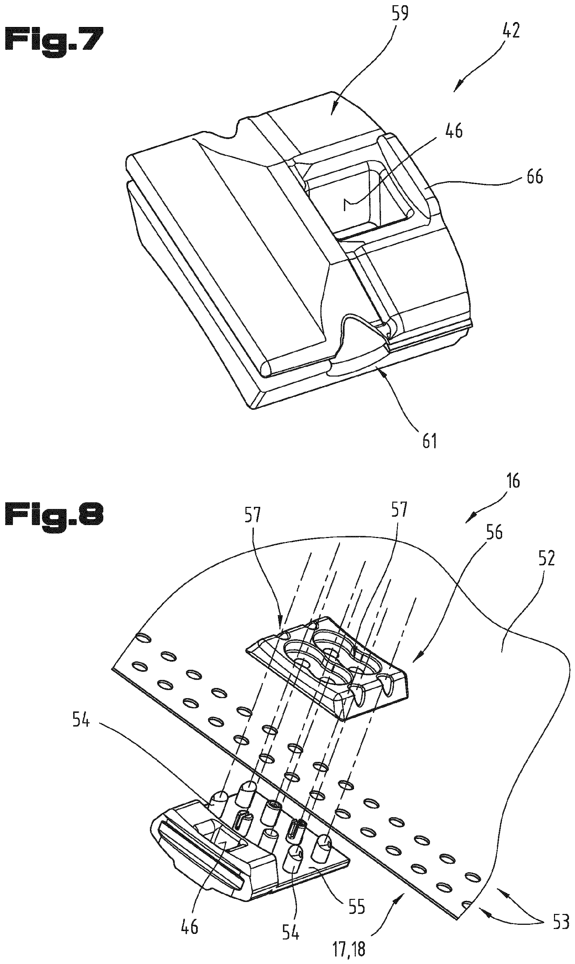

Um eine ausreichend gute formschlüssige Befestigung der einzelnen Gleitelemente 42 an dem flächig ausgebildeten planenartigen Bauteil, nämlich dem Planen-Element 52 des Verschlusselements 16 zu ermöglichen, kann das Verschlusselement 16 randseitig jeweils mit einem Keder 60 versehen sein. Der Keder 60 bildet eine wulstartige Verdickung aus. Der Keder 60 kann entweder direkt in das Planen-Element 52 des Verschlusselements 16 eingebettet sein oder als eigene Bauteilkomponente mittels einer Kederfahne am Planen-Element 52 befestigt sein. Die Gleitelemente 42 weisen zur Aufnahme des Seitenrandes 17, 18 mit dem dort befindlichen Keder 60 einen im Querschnitt gesehen daran angepassten Befestigungskanal 61 auf. Das dazu ausgebildete Gleitelement 42 ist aus den Fig. 6 und 7 zu ersehen. Auf die detaillierte Darstellung des Planen-Elements 52 mit dem im Bereich der Seitenränder 17, 18 jeweils angeordneten Keder 60 wurde der besseren Übersichtlichkeit halber verzichtet und nur in strichlierten Linien angedeutet.

Weiters ist in der Fig. 6 noch eines der Führungsprofile 24, 25 zusätzlich zum Gleitelement 42 gezeigt. Das Führungsprofil 24, 25 ist mit einem im Wesentlichen C-förmigen Querschnitt ausgebildet. In einer der Außenfläche 21 des Verschlusselements 16 zugewendeten Seite weist das Führungsprofil 24, 25 einen ersten Schenkel 62 und auf der gegenüberliegenden Seite, nämlich im Bereich der Innenfläche 22, einen zweiten Schenkel 63 auf. Die beiden Schenkel 62, 63 sind auf der vom Verschlusselement 16 abgewendeten Seite mittels eines Stegs 64 miteinander verbunden. Hier ist der erste Schenkel 62 selbst aus einem Profilteil gebildet, welcher einen nicht näher bezeichneten Kanal zur Halterung eines Dichtelements aufweist. In einer dem zu führenden Gleitelement 42 zugewendeten Profilwand des ersten Schenkels 62 ist hier ein Führungskanal 65 zur Aufnahme und sicheren Längsführung einer vom Führungskörper 59 vorragenden Führungsnase 66 oder eines Führungsstegs vorgesehen. Eine lichte Öffnungsweite zwischen den beiden Schenkeln 62, 63 ist so bemessen, dass eine ausreichend hohe Führungsgenauigkeit ohne eines Verklemmens des Führungskörpers 59 erzielt werden kann.

Die Führungsnase 66 oder der Führungssteg dient dazu, die ausschließliche Längsführung der einzelnen Gleitelemente 42 in den C-förmig ausgebildeten Führungsprofilen 24, 25 im Zusammenwirken mit deren Eingriff im Führungskanal 65 sicher zu stellen. Die beiden Schenkel 62 und 63 der beiden Führungsprofile 24, 25 ragen im Einbauzustand jeweils in Richtung auf das gegenüberliegend angeordnete Führungsprofil 24 oder 25 vor. Der Steg 64 ist jeweils außenseitig bezüglich der Öffnung 15 verlaufend angeordnet. Der Öffnungsquerschnitt des Führungskanals 65 weist eine parallele Ausrichtung bezüglich der beiden Schenkel 62, 63 auf.

Weiters ist, wie bereits zuvor beschrieben, eines der Durchgangslöcher 67 angedeutet, welches im vorliegenden Ausführungsbeispiel als Senkbohrung ausgebildet ist und zur Aufnahme einer nicht näher dargestellten Senkkopfschraube dienen kann. Die Durchgangslöcher 67 sind im Steg 64 des Führungsprofils 24 oder 25 angeordnet.

Weiters ist es noch möglich, wie dies in der Fig. 8 zu ersehen ist, dass zur Befestigung der Gleitelemente 42 an den beiden Seitenrändern 17 und 18 im Planen-Element 52 zur Bildung des Verschlusselements 16 zumindest eine Lochreihe 53, bevorzugt jeweils zwei Lochreihen 53, angeordnet sind. Diese Befestigung kann gegebenenfalls eine für sich eigenständige Ausbildung darstellen. Es ist aber auch eine Kombination mit zumindest einer der weiteren in dieser Anmeldung beschriebenen Ausbildungen möglich und denkbar. Dazu weisen die Gleitelemente 42 je nach deren flächenmäßiger Größe derselben eine dazu entsprechende Anzahl an Fortsätzen 54 auf, welche in die jeweiligen Löcher der Lochreihe 53 bei der Montage eingesetzt werden. Jedes der Gleitelemente 42 kann z.B. je Lochreihe eine Anzahl an Fortsätzen 54 zwischen 2 Stück und 6 Stück, bevorzugt von 4 Stück aufweisen. Sind z.B. zwei Lochreihen 53 je Seitenrand 17 oder 18 nebeneinander verlaufend vorgesehen, kann die gesamte Anzahl an Fortsätzen 54 je Gleitelement 42 zwischen 4 Stück und 12 Stück, bevorzugt von 8 Stück, betragen. Die Fortsätze 54 können an einem in paralleler Richtung bezüglich des Planen-Elements 52 ausgerichtete Halteansatz 55 angeordnet oder ausgebildet sein.

Das Gleitelement 42 kann auch noch im Bereich der Fortsätze 54 auf der gegenüberliegenden Seite des Planen-Elements 52 eine Halteplatte 56 umfassen, welche eine der Anzahl an Fortsätzen 54 entsprechende Anzahl an Aufnahmeöffnungen 57 enthält. Damit wird es möglich, auf einer Seite des Planen-Elements 52 das Gleitelement 42 mit seinen Fortsätzen 54 derart anzuordnen, dass diese die dafür vorgesehenen Löcher der Lochreihe 53 oder der Lochreihen 53 durchsetzen und auf der gegenüberliegenden Seite je Gleitelement 42 eine der Halteplatten 56 anzuordnen und mit den Fortsätzen 54 zu verbinden. Die Halterung und Verbindung der Halteplatte 56 mit den in ihre Aufnahmeöffnungen 57 eingreifenden Fortsätzen 54 kann mittels Presspassungen und/oder formschlüssig erfolgen.

Eine zusätzliche Verschraubung und/oder Verrastung zwischen diesen Bauteilen oder Bauteilkomponenten kann auch noch vorgesehen werden.

Sind für die Verstellbewegung des Verschlusselements 16 im Bereich der Umlenkvorrichtung 29 die Antriebsorgane 44 und das damit in Antriebsverbindung stehende Antriebsmittel vorgesehen, welche mit ihren Eingriffselementen 49 mit den Gleitelementen 42 in Eingriff stehen, kann ein eigenes Antriebsmittel, wie z.B. ein Motor, ein Drehzylinder oder dergleichen vorgesehen sein.

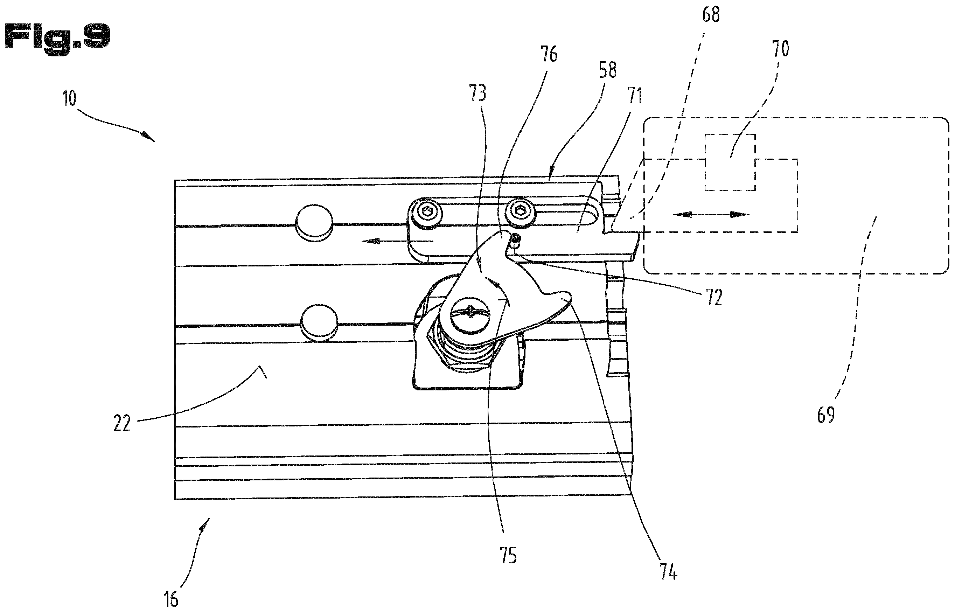

Bei solchen mittels elektrischer Energie angetriebenen Verschlussanordnungen 10 kann auch die Verriegelung und damit ein Versperren des Verschlusselements 16 gegen unberechtigtes Öffnen mit einer mittels elektrischer Energie betätigbaren Sperrvorrichtung 58 erfolgen. In der Fig. 9 ist dazu eine mögliche Ausführungsform in einer Innenansicht auf das Verschlusselement 16 gezeigt.

Um einen unberechtigten Zugang und ein damit verbundenes Öffnen des Verschlusselements 16 von seiner Verschlussstellung in eine zumindest teilweise geöffnete Öffnungsstellung zu verhindern, kann die Sperrvorrichtung 58 vorgesehen werden.

Im Normalbetrieb und somit bei vorhandener Energieversorgung der Sperrvorrichtung 58 mit elektrischer Energie kann ein in einem Gehäuse 69 angeordnetes und geführtes Verriegelungselement 68 der Sperrvorrichtung 58 mittels eines Stellgliedes 70 von einer Verriegelungsstellung in eine Freigabestellung verstellt werden. In der gezeigten Verriegelungsstellung ragt zumindest ein Teilabschnitt desselben über das Gehäuse 69 vor, wobei z.B. in der Freigabestellung das Verriegelungselement 68 mittels des Stellgliedes 70 in das Gehäuse 69 hineinverstellt sein kann. Diese gesamte Baueinheit ist in strichlierten Linien seitlich neben dem Verschlusselement 16 angedeutet und kann als elektro-mechanischer Stellantrieb bezeichnet werden. Das Gehäuse 69 ist zumeist an einem der Führungsprofile 24, 25 oder einem anderen ortsfesten Bauteil der Verschlussanordnung 10 und/oder am Fahrzeugaufbau 9 angeordnet, insbesondere daran feststehend befestigt. Das Verriegelungselement 68 kann auch als Verriegelungsnase bezeichnet werden.

Der Verriegelungszustand oder der Sperrzustand der Sperrvorrichtung 58 und damit verbunden die Verriegelung des Verschlusselements 16 in seiner Verschlussstellung der Öffnung 15 kann z.B. mittels elektrischer Betätigung erfolgen. Dies kann z.B. elektromotorisch oder elektromagnetisch erfolgen. Diese sind zumeist in selbsthaltender Ausführung ausgeführt und benötigen zum Wechsel zwischen den beiden Stellungen (Verriegelungs- oder Sperrstellung, Freigabestellung) elektrische Energie. Auf die Darstellung der Energieversorgung des mit elektrischer Energie betriebenen Stellmittels, nämlich des Stellgliedes 70, der Sperrvorrichtung 58, wurde der besseren Übersichtlichkeit halber verzichtet.

Um bei einem Wegfall der elektrischen Energie doch eine Zugangsmöglich und eine Entriegelung der Sperrvorrichtung 58 durchführen zu können, ist eine Notbetätigung vorzusehen. Die Entriegelung kann mittels eines Entriegelungselements, wie z.B. eines Schlüssels, auf manueller Weise erfolgen.

Das zumeist auf einen Schaltbefehl hin verstellbare Verriegelungselement 68 der elektrisch betriebenen Sperrvorrichtung 58 steht mechanisch mit einem Sperrriegel 71 in Eingriff, welcher in paralleler Richtung bezüglich der Innenfläche 22 des Verschlusselements 16 sowie in senkrechter Richtung bezüglich der Längserstreckung der Führungsprofile 24, 25 relativ verstellbar geführt ist.

Weiters ist noch gezeigt, dass zur manuellen Notbetätigung und der damit verbundenen Verstellung des Sperrriegels 71 von seiner Verriegelungsstellung oder Sperrstellung in die Freigabestellung am Sperrriegel 71 ein Stellzapfen 72 angeordnet oder ausgebildet ist, welcher mit einer an einem Stellelement 73 angeordneten oder ausgebildeten ersten Stellnase 74 mittels einer Schwenkbewegung in Eingriff gebracht werden kann. Die erste Stellnase 74 dient dazu, bei manuell durchgeführter Schwenkbewegung des Stellelements 73 in Richtung eines eingetragenen Pfeiles 75, im gezeigten Ausführungsbeispiel bei Ansicht auf die Innenseite entgegen dem Uhrzeigersinn, diese in Eingriff mit dem Stellzapfen 72 zu bringen und damit nachfolgend die Entriegelung der Sperrvorrichtung 58 durchzuführen. Die Schwenkbewegung des Stellelement 73 wird zumeist oder bevorzugt von der Außenseite mittels eines berechtigten Schlüssels mechanisch und manuell durchgeführt.

Der Sperrriegel 71 kann an der Innenfläche 22 des Verschlusselements 16 längsverschieblich in Richtung auf eines der Führungsprofile 24, 25 daran geführt sein. Soll eine Rückverstellung des Sperrriegels 71 in seine Sperrstellung oder Eingriffsstellung mit dem Verriegelungselement 68 auch auf manuellem Weg durchgeführt werden, ist dazu am Stellelement 73 eine zweite Stellnase 76 vorgesehen, welche in entgegengesetzter Wirkungsrichtung bezüglich der Öffnungsbewegung des Sperrriegels 71 mit dem dort befindlichen Stellzapfen 72 in Wirkeingriff gebracht werden kann. Damit kann eine Verlagerung des Sperrriegels 71 von seiner Entriegelungsstellung in die Verriegelungsstellung erfolgen. Dies kann bevorzugt auf einer manuellen Betätigung basierend sein.

Der Sperrriegel 71 kann auch mittels der zweiten Stellnase 76 im Zusammenwirken mit dem an diesem angeordneten Stellzapfen 72 mechanisch gesichert in der Verriegelungs- oder Sperrstellung gehalten werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Kraftfahrzeug | 31 | Dichtelement |
| 2 | Fahrgestell | 32 | erster Längsrand |
| 3 | Fahrerkabine | 33 | zweiter Längsrand |
| 4 | Fahrwerk | 34 | Flachprofilbreite |
| 5 | Vorderradanordnung | 35 | Längswulst |
| 6 | Hinterradanordnung | 36 | erster Profilkörper |
| 7 | Antriebsaggregat | 37 | zweiter Profilkörper |
| 8 | Kabinenmodul | 38 | Aufnahmekanal |
| 9 | Fahrzeugaufbau | 39 | weiterer Aufnahmekanal |
| 10 | Verschlussanordnung | 40 | Abstand |
| 11 | Frontseite | 41 | Innenwand |
| 12 | Heckseite | 42 | Gleitelement |
| 13 | Aufstandsfläche | 43 | Umlenkrad |
| 14 | Fahrtrichtung | 44 | Antriebsorgan |
| 15 | Öffnung | 45 | Antriebswelle |
| 16 | Verschlusselement | 46 | Vertiefung |
| 17 | linker Seitenrand | 47 | Innenseite |
| 18 | rechter Seitenrand | 48 | Außenseite |
| 19 | erster Querrand | 49 | Eingriffselement |
| 20 | zweiter Querrand | 50 | Führungselement |
| 21 | Außenfläche | 51 | Kanal |
| 22 | Innenfläche | 52 | Planen-Element |
| 23 | Führungsanordnung | 53 | Lochreihe |
| 24 | linkes Führungsprofil | 54 | Fortsatz |
| 25 | rechtes Führungsprofilt | 55 | Halteansatz |
| 26 | Abdeckelement | 56 | Halteplatte |
| 27 | Schlitz | 57 | Aufnahmeöffnung |
| 28 | Wickelvorrichtung | 58 | Sperrvorrichtung |
| 29 | Umlenkvorrichtung | 59 | Führungskörper |
| 30 | Umlenkabschnitt | 60 | Keder |
| 61 | Befestigungskanal | | |
| 62 | erster Schenkel | | |
| 63 | zweiter Schenkel | | |
| 64 | Steg | | |
| 65 | Führungskanal | | |
| 66 | Führungsnase | | |
| 67 | Durchgangsloch | | |
| 68 | Verriegelungselement | | |
| 69 | Gehäuse | | |
| 70 | Stellglied | | |
| 71 | Sperrriegel | | |
| 72 | Stellzapfen | | |
| 73 | Stellelement | | |
| 74 | erste Stellnase | | |
| 75 | Pfeil | | |
| 76 | zweite Stellnase | | |

## Patentansprüche

1. Verschlussanordnung (10) für eine Öffnung (15), insbesondere an oder in einem Kraftfahrzeug (1), einem Anhänger oder einem Wechselmodul, umfassend
- ein Verschlusselement (16) mit einem linken Seitenrand (17), einem rechten Seitenrand (18), einem ersten Querrand (19), einem in Richtung der Längserstreckung des Verschlusselements (16) davon distanzierten zweiten Querrand (20), und mit einer Außenfläche (21) und einer Innenfläche (22), wobei das Verschlusselement (16) von einer die Öffnung (15) verschließenden Verschlussstellung in eine die Öffnung (15) freigebende Öffnungsstellung verstellbar ist,
- eine Führungsanordnung (23) mit einem linken Führungsprofil (24) und einem rechten Führungsprofil (25) für jeweils einen Seitenrand (17, 18) des Verschlusselements (16),
- ein Abdeckelement (26), welches Abdeckelement (26) sich zumindest zwischen dem linken Führungsprofil (24) und dem rechten Führungsprofil (25) erstreckt und die Öffnung (15) randseitig an einem ersten Öffnungsrand begrenzt, wobei das Abdeckelement (26) zwischen sich und der Außenfläche (21) des Verschlusselements (16) einen Schlitz (27) definiert,
- eine Wickelvorrichtung (28) für das Verschlusselement (16), wobei der erste Querrand (19) des Verschlusselements (16) mit der Wickelvorrichtung (28) in Antriebsverbindung steht, und das Verschlusselement (16) in seiner Öffnungsstellung an der Wickelvorrichtung (28) zu einem überwiegenden Anteil seiner Längserstreckung aufgewickelt ist,
- eine Umlenkvorrichtung (29), welche Umlenkvorrichtung (29) einen Umlenkabschnitt (30) für das Verschlusselement (16) definiert,
- zumindest ein Dichtelement (31), welches zumindest eine Dichtelement (31) an der Außenfläche (21) des Verschlusselements (16) angeordnet ist, und sich das Dichtelement (31) zwischen dem linken Seitenrand (17) und dem rechten Seitenrand (18) des Verschlusselements (16) erstreckt und bei sich in der Verschlussstellung befindlichem Verschlusselement (16) am Abdeckelement (26) anliegt und den Schlitz (27) abschließt, **dadurch gekennzeichnet,**
- **dass** das Dichtelement (31) in seinem unverformten Zustand als Flachprofil mit einem ersten Längsrand (32) und einem zweiten Längsrand (33) ausgebildet ist, und das Dichtelement (31) zwischen seinem ersten Längsrand (32) und seinem zweiten Längsrand (33) eine Flachprofilbreite (34) aufweist,
- **dass** das Verschlusselement (16) weiters einen ersten Profilkörper (36) und einen zweiten Profilkörper (37) umfasst,
- **dass** sich die beiden Profilkörper (36, 37) zwischen dem linken Seitenrand (17) und dem rechten Seitenrand (18) des Verschlusselements (16) erstrecken,
- **dass** die beiden Profilkörper (36, 37) gelenkig verbunden sind,
- **dass** jeder der beiden Profilkörper (36, 37) mit zumindest einem Aufnahmekanal (38) versehen ist, und jeder der Aufnahmekanäle (38) in paralleler Richtung bezüglich der Längserstreckung des Profilkörpers (36, 37) ausgerichtet ist sowie sich in Richtung auf die Innenfläche (22) in den Profilkörper (36, 37) hinein erstreckt,
- **dass** der erste Längsrand (32) des Dichtelements (31) im Aufnahmekanal (38) des ersten Profilkörpers (36) und der zweite Längsrand (33) des Dichtelements (31) im Aufnahmekanal (38) des zweiten Profilkörpers (37) aufgenommen ist, und
- **dass** bei ebenflächiger Lage der beiden Profilkörper (36, 37) die Flachprofilbreite (34) des Dichtelements (31) größer ausgebildet ist als ein Abstand (40) zwischen dem Aufnahmekanal (38) des ersten Profilkörpers (36) und dem Aufnahmekanal (38) des zweiten Profilkörpers (37).

2. Verschlussanordnung (10) nach Anspruch 1, **dadurch gekennzeichnet, dass** das Dichtelement (31) aus einem verformbaren und elastisch selbsttätig rückstellbaren Werkstoff gebildet ist.

3. Verschlussanordnung (10) nach Anspruch 1 oder 2, **dadurch gekennzeichnet, dass** das Dichtelement (31) an zumindest einem seiner Längsränder (32, 33), bevorzugt an beiden seiner Längsränder (32, 33), einen Längswulst (35) aufweist.

4. Verschlussanordnung (10) nach einem der vorhergehenden Ansprüche, **dadurch gekennzeichnet, dass** das Verschlusselement (16) mehrere Rollladenstäbe umfasst, welche Rollladenstäbe gemeinsam mit den beiden Profilkörpern (36, 37) einen Rollladenpanzer bilden.

5. Verschlussanordnung (10) nach einem der Ansprüche 1 bis 3, **dadurch gekennzeichnet, dass** das Verschlusselement (16) ein Planen-Element (52) umfasst, und die beiden Profilkörper (36, 37) am Planen-Element (52) angeordnet oder mit diesem verbunden sind.

6. Verschlussanordnung (10) nach einem der vorhergehenden Ansprüche, **dadurch gekennzeichnet, dass** der erste Profilkörper (36) und der zweite Profilkörper (37) den gleichen Profilquerschnitt aufweisen.

7. Verschlussanordnung (10) nach Anspruch 6, **dadurch gekennzeichnet, dass** jeder der beiden Profilkörper (36, 37) zusätzlich zu seinem Aufnahmekanal (38) mit einem weiteren Aufnahmekanal (39) versehen ist und der Aufnahmekanal (38) und der weitere Aufnahmekanal (39) unmittelbar nebeneinander verlaufend angeordnet sind.

8. Verschlussanordnung (10) nach Anspruch 7, **dadurch gekennzeichnet, dass** die Aufnahmekanäle (38) jeweils mit einem bezüglich von deren Kanalquerschnitt dazu reduzierten Eintrittsquerschnitts ausgebildet sind, und dass im Querschnitt gesehen, die jeweils einen reduzierten Querschnitt aufweisenden Eintrittsquerschnitte des Aufnahmekanals (38) und des weiteren Aufnahmekanals (39) einander zugewendet ausgerichtet sind, und dass der erste Längsrand (32) des Dichtelements (31) im Aufnahmekanal (38) des ersten Profilkörpers (36) und der zweite Längsrand (33) des Dichtelements (31) im weiteren Aufnahmekanal (39) des zweiten Profilkörpers (37) aufgenommen ist.

9. Verschlussanordnung (10) nach einem der vorhergehenden Ansprüche, **dadurch gekennzeichnet, dass** das Abdeckelement (26) in seinem Querschnitt gesehen sowie an seiner dem Verschlusselement (16) zugewendeten Innenseite eine bogenförmig gekrümmte Innenwand (41) umfasst, an welcher Innenwand (41) das Dichtelement (31) bei sich in der Verschlussstellung befindlichem Verschlusselement (16) anliegt.

10. Verschlussanordnung (10) nach einem der vorhergehenden Ansprüche, **dadurch gekennzeichnet, dass** das Verschlusselement (16) entlang seiner Seitenränder (17, 18) jeweils mehrere in Richtung der Längserstreckung hintereinander angeordnete Gleitelemente (42) umfasst und dass die Gleitelemente (42) jeweils einen Führungskörper (59) mit einer im Bereich der Außenfläche (21) des Verschlusselements (16) angeordneten Außenseite (48) und mit einer im Bereich der Innenfläche (22) des Verschlusselements (16) angeordneten Innenseite (47) umfassen, wobei die am linken Seitenrand (17) befindlichen Gleitelemente (42) im linken Führungsprofil (24) und die am rechten Seitenrand (18) befindlichen Gleitelemente (42) im rechten Führungsprofil (25) geführt sind.

11. Verschlussanordnung (10) nach Anspruch 10, **dadurch gekennzeichnet, dass** die Gleitelemente (42) jeweils an ihrem Führungskörper (59), insbesondere an ihrer Außenseite (48), mit einer Führungsnase (66) versehen sind, und die Führungsnasen (66) der Gleitelemente (42) in dem jeweiligen Führungsprofil (24, 25) ausschließlich in Längsrichtung des Führungsprofils (24, 25) in einem Führungskanal (65) zwangsgeführt sind und eine Bewegung der Gleitelemente (42) abweichend von der zwangsgeführten Längsführung, insbesondere in Richtung auf das jeweils gegenüberliegend angeordnete Führungsprofil (25, 24), verhindert ist.

12. Verschlussanordnung (10) nach Anspruch 10 oder 11, **dadurch gekennzeichnet, dass** das Gleitelement (42) einen in paralleler Richtung bezüglich des Planen-Elements (52) ausgerichtete Halteansatz (55) sowie mehrere von diesem abstehende Fortsätze (54) umfasst und die abstehenden Fortsätze (54) zur Befestigung des Gleitelements (42) am Planen-Element (52) in dazu passend angeordnete Löcher im Planen-Element (52) eingesetzt sind und dass auf der dem Halteansatz (55) gegenüberliegenden Seite des Planen-Elements (52) eine Halteplatte (56) vorgesehen ist, welche eine der Anzahl an Fortsätzen (54) entsprechende Anzahl an Aufnahmeöffnungen (57) enthält und die Fortsätze (54) in die Aufnahmeöffnungen (57) eingesetzt sind.

13. Verschlussanordnung (10) nach einem der Ansprüche 10 bis 12, **dadurch gekennzeichnet, dass** das Gleitelement (42) einen Befestigungskanal (61) aufweist, in welchem Befestigungskanal (61) ein entlang des Seitenrandes (17, 18) des Planen-Elements (52) befindlicher Keder aufgenommen ist.

14. Verschlussanordnung (10) nach einem der vorhergehenden Ansprüche, **dadurch gekennzeichnet, dass** im Führungsprofil (24, 25) mehrere in Abstand sowie in Richtung der Längserstreckung hintereinander angeordnete Durchgangslöcher (66) angeordnet sind.

15. Verschlussanordnung (10) nach einem der vorhergehenden Ansprüche, **dadurch gekennzeichnet, dass** die Umlenkvorrichtung (29) im Bereich jedes Seitenrandes (17, 18) des Verschlusselements (16) jeweils ein radförmig ausgebildetes Antriebsorgan 44 mit mehreren in radialer Richtung vorragend ausgebildeten Eingriffselementen (49) aufweist und die beiden Antriebsorgane (44) mittels einer gemeinsamen Antriebswelle (45) miteinander in Antriebsverbindung stehen und die Antriebswelle (45) mit einem Antriebsmittel in Antriebsverbindung steht.

16. Verschlussanordnung (10) nach einem der vorhergehenden Ansprüche, **dadurch gekennzeichnet, dass** die Umlenkvorrichtung (29) weiters im Bereich jedes Seitenrandes (17, 18) des Verschlusselements (16) ein Führungselement (50) aufweist, welches Führungselement (50) in radialer Richtung vom radförmig ausgebildeten Antriebsorgan (44) distanziert angeordnet ist und im Umlenkabschnitt (30) zwischen dem Führungselement (50) und dem Antriebsorgan (44) ein Kanal (51) zum Hindurchführen der in Richtung der Längserstreckung des Verschlusselements (16) hintereinander angeordneten Gleitelemente (42) ausgebildet ist.

17. Verschlussanordnung (10) nach einem der Ansprüche 10 bis 16, **dadurch gekennzeichnet, dass** die Gleitelemente (42) jeweils mit einer Vertiefung (46) oder einem Durchbruch versehen sind, welche Vertiefung (46) oder welcher Durchbruch sich ausgehend von der der Innenfläche (22) des Verschlusselements (16) zugewendeten Innenseite (47) in Richtung auf die Außenseite (48) erstreckt und dass im Umlenkabschnitt (30) jeweils eines der Eingriffselemente (49) des radförmig ausgebildeten Antriebsorgans (44) in eine der Vertiefungen (46) oder in einen der Durchbrüche eingreift.

18. Verschlussanordnung (10) nach einem der vorhergehenden Ansprüche, **dadurch gekennzeichnet, dass** eine Sperrvorrichtung (58) vorgesehen ist, mittels welcher Sperrvorrichtung (58) das Verschlusselement (16) in seiner die Öffnung (15) verschließenden Verschlussstellung in einer Sperrstellung verriegelt gehalten ist und dass die Sperrvorrichtung (58) einen Sperrriegel (71) sowie ein in einem Gehäuse (69) angeordnetes Verriegelungselement (68) und ein damit in Wirkverbindung stehenden, mittels elektrischer Energie betriebenes Stellglied (70) umfasst, und in einer Verriegelungsstellung der Sperrvorrichtung (58) das Verriegelungselement (68) mit dem Sperrriegel (71) in Eingriff steht, und dass bei Wegfall der elektrischen Energie der Sperrriegel (71) mittels eines manuell betätigbaren Stellelements (73) in eine Entriegelungsstellung umstellbar ist, in welcher der Sperrriegel (71) außer Eingriff mit dem Verriegelungselement (68) ist.

19. Verschlussanordnung (10) nach Anspruch 18, **dadurch gekennzeichnet, dass** der Sperrriegel (71) an der Innenfläche (22) des Verschlusselements (16) angeordnet und in paralleler Richtung bezüglich der Innenfläche (22) des Verschlusselements (16) sowie in senkrechter Richtung bezüglich der Längserstreckung der Führungsprofile (24, 25) relativ verstellbar geführt ist.

## Claims

1. A closure assembly (10) for an opening (15), in particular on or in a motor vehicle (1), a trailer or an exchangeable module, comprising
- a closure element (16) with a left side edge (17), a right side edge (18), a first transverse edge (19), a second transverse edge (20) arranged at a distance therefrom in the direction of the longitudinal extent of the closure element (16), and having an outer surface (21) and an inner surface (22), wherein the closure element (16) can be adjusted from a closed position closing the opening (15) into an open position releasing the opening (15),
- a guide arrangement (23) with a left guide profile (24) and a right guide profile (25) for each side edge (17, 18) of the closure element (16),
- a cover element (26), said cover element (26) extending at least between the left guide profile (24) and the right guide profile (25) and limiting the opening (15) at the edge on a first opening edge, wherein the cover element (26) defines a slot (27) between itself and the outer surface (21) of the closure element (16),
- a winding device (28) for the closure element (16), wherein the first transverse edge (19) of the closure element (16) is drive-connected to the winding device (28), and in its open position, a predominant part of the longitudinal extent of the closure element (16) is wound up on the winding device (28),
- a deflection device (29), said deflection device (29) defining a deflection section (30) for the closure element (16),
- at least one sealing element (31), said at least one sealing element (31) being arranged on the outer surface (21) of the closure element (16), and the sealing element (31) extending between the left side edge (17) and the right side edge (18) of the closure element (16) and lying against the cover element (26) and closing the slot (27) when the closure element (16) is in the closed position,
**characterized in**
- **that** the sealing element (31) in its undeformed state is formed as a flat profile with a first longitudinal edge (32) and a second longitudinal edge (33), and the sealing element (31) has a flat profile width (34) between its first longitudinal edge (32) and its second longitudinal edge (33),
- **that** the closure element (16) further comprises a first profile body (36) and a second profile body (37),
- **that** the two profile bodies (36, 37) extend between the left side edge (17) and the right side edge (18) of the closure element (16),
- **that** the two profile bodies (36, 37) are articulately connected,
- **that** each one of the two profile bodies (36, 37) is provided with at least one receiving channel (38), and each one of the receiving channels (38) is oriented in parallel direction with respect to the longitudinal extent of the profile body (36, 37) and extends in the direction towards the inner surface (22) into the profile body (36, 37),
- **that** the first longitudinal edge (32) of the sealing element (31) is held in the receiving channel (38) of the first profile body (36) and the second longitudinal edge (33) of the sealing element (31) is held in the receiving channel (38) of the second profile body (37), and
- **that** when the two profile bodies (36, 37) are in a flat position, the flat profile width (34) of the sealing element (31) is formed larger that a distance (40) between the receiving channel (38) of the first profile body (36) and the receiving channel (38) of the second profile body (37).

2. The closure assembly (10) according to claim 1, **characterized in that** the sealing element (31) is formed from a deformable and elastically self-restoring material.

3. The closure assembly (10) according to claim 1 or 2, **characterized in that** the sealing element (31) comprises a longitudinal bead (35) on at least one of its longitudinal edges (32, 33), preferably on both of its longitudinal edges (32, 33).

4. The closure assembly (10) according to one of the preceding claims, **characterized in that** the closure element (16) comprises several roller shutter slats, said roller shutter slats forming a roller shutter shield together with the two profile bodies (36, 37).

5. The closure assembly (10) according to one of claims 1 to 3, **characterized in that** the closure element (16) comprises a tarpaulin element (52), and the two profile bodies (36, 37) are arranged on the tarpaulin element (52) or are connected thereto.

6. The closure assembly (10) according to one of the preceding claims, **characterized in that** the first profile body (36) and the second profile body (37) have the same profile cross-section.

7. The closure assembly (10) according to claim 6, **characterized in that** each of the two profile bodies (36, 37) is provided with a further receiving channel (39) in addition to its receiving channel (38) and the receiving channel (38) and the further receiving channel (39) are arranged to extend directly next to one another.

8. The closure assembly (10) according to claim 7, **characterized in that** the receiving channels (38) are each formed with an inlet cross-section which is reduced in relation to their channel cross-section, and that, as viewed in cross-section, the inlet cross-sections of the receiving channel (38) and of the further receiving channel (39), which each have a reduced cross-section, are oriented facing one another, and that the first longitudinal edge (32) of the sealing element (31) is held in the receiving channel (38) of the first profile body (36) and the second longitudinal edge (33) of the sealing element (31) is held in the further receiving channel (39) of the second profile body (37).

9. The closure assembly (10) according to one of the preceding claims, **characterized in that** the cover element (26), as viewed in its cross-section and on its inner side facing the closure element (16) comprises an arcuately curved inner wall (41), against which inner wall (41) the sealing element (31) lies when the closure element (16) is in the closed position.

10. The closure assembly (10) according to one of the preceding claims, **characterized in that** the closure element (16) along each of its side edges (17, 18) comprises several sliding elements (42) arranged behind one another in the direction of the longitudinal extent and that the sliding elements (42) each comprise a guide body (59) with an outer side (48) arranged in the region of the outer surface (21) of the closure element (16) and with an inner side (47) arranged in the region of the inner surface (22) of the closure element (16), wherein the sliding elements (42) located on the left side edge (17) are guided in the left guide profile (24) and the sliding elements (42) located on the right side edge (18) are guided in the right guide profile (25).

11. The closure assembly (10) according to claim 10, **characterized in that** the sliding elements (42) are each provided with a guide lug (66) on their guide body (59), in particular on their outer side (48), and the guide lugs (66) of the sliding elements (42) are positively guided in the respective guide profile (24, 25) in a guide channel (65) exclusively in the longitudinal direction of the guide profile (24, 25) and a movement of the sliding elements (42) deviating from the positively guided longitudinal guiding, in particular in the direction towards the respective oppositely arranged guide profile (25, 24), is prevented.

12. The closure assembly (10) according to claim 10 or 11, **characterized in that** the sliding element (42) comprises a retaining projection (55) oriented in a parallel direction with respect to the tarpaulin element (52) and several projections (54) projecting therefrom, and the projecting projections (54) are inserted into holes in the tarpaulin element (52) arranged in a matching manner for fastening the sliding element (42) to the tarpaulin element (52), and that a retaining plate (56) is provided on the side of the tarpaulin element (52) opposite the retaining projection (55), which contains a number of receiving openings (57) corresponding to the number of projections (54) and the projections (54) are inserted into the receiving openings (57).

13. The closure assembly (10) according to one of claims 10 to 12, **characterized in that** the sliding elements (42) comprises a fastening channel (61), in which fastening channel (61) a piping located along the side edges (17, 18) of the tarpaulin element (52) is held.

14. The closure assembly (10) according to one of the preceding claims, **characterized in that** several through holes (66) arranged at a distance and behind one another in the direction of the longitudinal extent are arranged in the guide profile (24, 25).

15. The closure assembly (10) according to one of the preceding claims, **characterized in that** the deflection device (29) in the region of each side edge (17, 18) of the closure element (16) has a respective wheel-shaped drive member (44) with several engagement elements (49) formed to project in the radial direction and the two drive members (44) are drive-connected one another by means of a common drive shaft (45) and the drive shaft (45) is drive-connected to a drive means.

16. The closure assembly (10) according to one of the preceding claims, **characterized in that** the deflection device (29) further comprises a guide element (50) in the region of each side edge (17, 18) of the closure element (16), said guide element (50) being arranged at a distance from the wheel-shaped drive member (44) in the radial direction and a channel (51) for guiding through the sliding elements (42) arranged behind one another in the direction of the longitudinal extent of the closure element (16) is formed in the deflection section (30) between the guide element (50) and the drive member (44).

17. The closure assembly (10) according to one of claims 10 to 16, **characterized in that** the sliding elements (42) are each provided with a recess (46) or a breakthrough, said recess (46) or said breakthrough extending from the inner side (47) facing the inner surface (22) of the closure element (16) in the direction towards the outer side (48) and that in the deflection section (30), in each case, one of the engagement elements (49) of the wheel-shaped drive member (44) engages in one of the recesses (46) or in one of the breakthroughs.

18. The closure assembly (10) according to one of the preceding claims, **characterized in that** a locking device (58) is provided, by means of which locking device (58) the closure element (16) is held locked in a locked position in its closed position closing the opening (15), and that the locking device (58) comprises a locking bar (71) and a locking element (68) arranged in a housing (69) and an adjusting member (70) operatively connected thereto and being operated by means of electrical energy, and in a locking position of the locking device (58) the locking element (68) is in engagement with the locking bar (71), and that, when the electrical energy ceases to be present, the locking bar (71) can be switched by means of a manually operable adjusting element (73) into an unlocking position in which the locking bar (71) is out of engagement with the locking element (68).

19. The closure assembly (10) according to claim 18, **characterized in that** the locking bar (71) is arranged on the inner surface (22) of the closure element (16) and is guided in a relatively adjustable manner in a parallel direction with respect to the inner surface (22) of the locking element (16) and in a perpendicular direction with respect to the longitudinal extent of the guide profiles (24, 25).

## Revendications

1. Dispositif de fermeture (10) pour une ouverture (15), plus particulièrement sur ou dans un véhicule automobile (1), une remorque ou un module interchangeable, comprenant
- un élément de fermeture (16) avec un bord latéral gauche (17), un bord latéral droit (18), un premier bord transversal (19) un deuxième bord transversal (20) distant de celui-ci dans la direction de l'extension longitudinale de l'élément de fermeture (16), et avec une surface externe (21) et une surface interne (22), l'élément de fermeture (16) pouvant être déplacé d'une position de fermeture fermant l'ouverture (15) vers une position d'ouverture dégageant l'ouverture (15),
- un dispositif de guidage (23) avec un profilé de guidage gauche (24) et un profilé de guidage droit (25), chacun pour un bord latéral (17, 18) de l'élément de fermeture (16),
- un élément de recouvrement (26), cet élément de recouvrement (26) s'étendant au moins entre le profilé de guidage gauche (24) et le profilé de guidage droit (25) et limitant l'ouverture (15) du côté du bord au niveau d'un premier bord d'ouverture, l'élément de recouvrement (26) définissant, entre lui et la surface externe (21) de l'élément de fermeture (16), une fente (27),
- un dispositif d'enroulement (28) pour l'élément de fermeture (16), le premier bord transversal (19) de l'élément de fermeture (16) étant en liaison d'entraînement avec le dispositif d'enroulement (28) et l'élément de fermeture (16) étant enroulé, dans sa position d'ouverture, sur le dispositif d'enroulement (28) sur la majeure partie de son extension longitudinale,
- un dispositif de renvoi (29), ce dispositif de renvoi (29) définissant une portion de renvoi (30) pour l'élément de fermeture (16),
- au moins un élément d'étanchéité (31), cet au moins un élément d'étanchéité (31) étant disposé sur la surface externe (21) de l'élément de fermeture (16) et l'élément d'étanchéité (31) s'étendant entre le bord latéral gauche (17) et le bord latéral droit (18) de l'élément de fermeture (16) et s'appuyant, lorsque l'élément de fermeture (16) se trouve dans la position de fermeture, contre l'élément de recouvrement (26) et obturant la fente (27), **caractérisé en ce que**
- l'élément d'étanchéité (31) est réalisé, dans son état non déformé, comme un profilé plat avec un premier bord longitudinal (32) et un deuxième bord longitudinal (33) et l'élément d'étanchéité (31) présente, entre son premier bord longitudinal (32) et son deuxième bord longitudinal (33), une largeur de profilé plat (34),
- l'élément* de fermeture (16) comprend en outre un premier corps de profilé (36) et un deuxième corps de profilé (37),
- les deux corps de profilé (36, 37) s'étendent entre le bord latéral gauche (17) et le bord latéral droit (18) de l'élément de fermeture (16),
- les deux corps de profilé (36, 37) sont reliés de manière articulée,
- chacun des deux corps de profilé (36, 37) est muni d'au moins un canal de logement (38) et chacun des canaux de logement (38) est orienté dans une direction parallèle à l'extension longitudinale du corps de profilé (36, 37) et s'étend en direction de la surface interne (22) dans le corps de profilé (36, 37),
- le premier bord longitudinal (32) de l'élément d'étanchéité (31) est logé dans le canal de logement (38) du premier corps de profilé (36) et le deuxième bord longitudinal (33) de l'élément d'étanchéité (31) est logé dans le canal de logement (38) du deuxième corps de profilé (37) et
- lors d'une position à plat des deux corps de profilé (36, 37), la largeur de profilé plat (34) de l'élément d'étanchéité (31) est supérieure à une distance (40) entre le canal de logement (38) du premier corps de profilé (36) et le canal de logement (38) du deuxième corps de profilé (37).

2. Dispositif de fermeture (10) selon la revendication 1, **caractérisé en ce que** l'élément d'étanchéité (31) est constitué d'un matériau déformable et reprenant élastiquement et automatiquement sa forme.

3. Dispositif de fermeture (10) selon la revendication 1 ou 2, **caractérisé en ce que** l'élément d'étanchéité (31) comprend, au niveau d'au moins un de ses bords longitudinaux (32, 33), de préférence au niveau de ses deux bords longitudinaux (32, 33), un bourrelet longitudinal (35).

4. Dispositif de fermeture (10) selon l'une des revendications précédentes, **caractérisé en ce que** l'élément de fermeture (16) comprend plusieurs lames de volet roulant, ces lames de volet roulant formant, conjointement avec les deux corps de profilé (36, 37), un blindage de volet roulant.

5. Dispositif de fermeture (10) selon l'une des revendications 1 à 3, **caractérisé en ce que** l'élément de fermeture (16) comprend un élément de bâche (52) et les deux corps de profilé (36, 37) sont disposés sur l'élément de bâche (52) ou reliés avec celui-ci.

6. Dispositif de fermeture (10) selon l'une des revendications précédentes, **caractérisé en ce que** le premier corps de profilé (36) et le deuxième corps de profilé (37) présentent la même section transversale de profilé.

7. Dispositif de fermeture (10) selon la revendication 6, **caractérisé en ce que** chacun des deux corps de profilé (36, 37) est muni, en plus de son canal de logement (38), d'un autre canal de logement (39) et le canal de logement (38) et l'autre canal de logement (39) sont disposés à proximité immédiate l'un de l'autre.

8. Dispositif de fermeture (10) selon la revendication 7, **caractérisé en ce que** les canaux de logement (38) sont réalisés chacun avec une section transversale d'entrée réduite par rapport à leur section transversale de canal et **en ce que**, vu en section transversale, les sections transversales d'entrée, présentant chacune une section transversale réduite, du canal de logement (38) et de l'autre canal de logement (39) sont orientées l'une vers l'autre et **en ce que** le premier bord longitudinal (32) de l'élément d'étanchéité (31) est logé dans le canal de logement (38) du premier corps de profilé (36) et le deuxième bord longitudinal (33) de l'élément d'étanchéité (31) est logé dans l'autre canal de logement (39) du deuxième de corps de profilé (37).

9. Dispositif de fermeture (10) selon l'une des revendications précédentes, **caractérisé en ce que** l'élément de recouvrement (26), comprend, vu dans sa section transversale, ainsi qu'au niveau de son côté interne orienté vers l'élément de fermeture (16), une paroi interne incurvée en forme d'arc (41) et l'élément d'étanchéité (31) s'appuie contre cette paroi interne (41) lorsque l'élément de fermeture (16) se trouve dans la position de fermeture.

10. Dispositif de fermeture (10) selon l'une des revendications précédentes, **caractérisé en ce que** l'élément de fermeture (16) comprend, le long de chacun de ses bords latéraux (17, 18), plusieurs éléments de glissement (42) disposés les uns derrière les autres en direction de l'extension longitudinale et **en ce que** les éléments de glissement (42) comprennent chacun un corps de guidage (59) avec un côté externe (48) disposé au niveau de la surface externe (21) de l'élément de fermeture (16) et avec un côté interne (47) disposé au niveau de la surface interne (22) de l'élément de fermeture (16), les éléments de glissement (42) se trouvant sur le bord latéral gauche (17) étant guidés dans le profilé de guidage gauche (24) et les éléments de glissement (42) se trouvant sur le bord latéral droit (18) étant guidés dans le profilé de guidage droit (25).

11. Dispositif de fermeture (10) selon la revendication 10, **caractérisé en ce que** les éléments de glissement (42) sont munis chacun, sur leur corps de guidage (59), p)lus particulièrement sur leur côté externe (48), d'un embout de guidage (66), et les embouts de guidage (66) des éléments de glissement (42) sont guidés de manière forcée chacun dans le profilé de guidage (24, 25) correspondant exclusivement dans la direction longitudinale du profilé de guidage (24, 25) dans un canal de guidage (65) et un déplacement des éléments de guidage (42) hors du guidage longitudinal guidé de manière forcée, plus particulièrement en direction du profilé de guidage (25, 24) disposé en face, est empêché.

12. Dispositif de fermeture (10) selon la revendication 10 ou 11, **caractérisé en ce que** l'élément de glissement (42) comprend un appendice de maintien (55) orienté dans une direction parallèle à l'élément de bâche (52) ainsi que plusieurs prolongements (54) partant de celui-ci et les prolongements (54) sont insérés, pour la fixation de l'élément de glissement (42) sur l'élément de bâche (52), dans des trous disposés de manière appropriée dans l'élément de bâche (52) et **en ce que**, sur le côté, opposé à l'appendice de maintien (55), de l'élément de bâche (52), est prévue une plaque de maintien (56), qui contient un nombre d'ouvertures de logement (57) correspondant au nombre de prolongements (54) et les prolongements (54) sont insérés dans les ouvertures de logement (57).

13. Dispositif de fermeture (10) selon l'une des revendications 10 à 12, **caractérisé en ce que** l'élément de glissement (42) comprend un canal de fixation (61), un bourrelet se trouvant le long du bord latéral (17, 18) de l'élément de bâche (52) étant logé dans ce canal de fixation (61).

14. Dispositif de fermeture (10) selon l'une des revendications précédentes, **caractérisé en ce que**, dans le profilé de guidage (24, 25) sont disposés plusieurs trous de passage (66) disposés à distance et les uns derrière les autres dans la direction de l'extension longitudinale.

15. Dispositif de fermeture (10) selon l'une des revendications précédentes, **caractérisé en ce que** le dispositif de renvoi (29) comprend, au niveau de chaque bord latéral (17, 18) de l'élément de fermeture (16), un organe d'entraînement (44) en forme de roue, avec plusieurs éléments d'emboîtement (49) dépassant dans la direction radiale et les deux organes d'entraînement (44) sont en liaison d'entraînement entre eux au moyen d'un arbre d'entraînement commun (45) et l'arbre d'entraînement (45) est en liaison d'entraînement avec un moyen d'entraînement.

16. Dispositif de fermeture (10) selon l'une des revendications précédentes, **caractérisé en ce que** le dispositif de renvoi (29) comprend en outre, au niveau de chaque bord latéral (17, 18) de l'élément de fermeture (16), un élément de guidage (50), cet élément de guidage (50) étant disposé à distance, dans la direction radiale, de l'organe d'entraînement (44) en forme de roue et, dans la portion de renvoi (30), entre l'élément de guidage (50) et l'organe d'entraînement (44), est réalisé un canal (51) pour le guidage des éléments de glissement (42) disposés les uns derrière les autres dans la direction de l'extension longitudinale de l'élément de fermeture (16).

17. Dispositif de fermeture (10) selon l'une des revendications 10 à 16, **caractérisé en ce que** les éléments de glissement (42) sont munis chacun d'une cavité (46) ou d'une percée, cette cavité (46) ou percée s'étendant à partir du côté interne (47) orienté vers la surface interne (22) de l'élément de fermeture (16) en direction du côté externe (48) et **en ce que**, dans la portion de renvoi (30) un des éléments d'emboîtement (49) de l'organe d'entraînement (44) en forme de roue s'emboîte dans une des cavités (46) ou dans une des percées.

18. Dispositif de fermeture (10) selon l'une des revendications précédentes, **caractérisé en ce qu'**un dispositif de blocage (58) est prévu, ce dispositif de blocage (58) permettant, dans une position de blocage, de maintenir l'élément de fermeture (16) verrouillé dans sa position de fermeture obturant l'ouverture (15) et **en ce que** le dispositif de blocage (58) comprend un verrou de blocage (71) ainsi qu'un élément de verrouillage (68) disposé dans un boîtier (69) et un organe de réglage (70) alimenté en énergie électrique et en liaison fonctionnelle avec celui-ci et, dans une position de verrouillage du dispositif de blocage (58), l'élément de verrouillage (68) est emboîté avec le verrou de blocage (71) et **en ce que**, en cas de panne d'énergie électrique, le verrou de blocage (71) peut être actionné, au moyen d'un élément de réglage (73) à actionnement manuel, dans une position de déverrouillage dans laquelle le verrou de blocage (71) est déboîté de l'élément de verrouillage (68).

19. Dispositif de fermeture (10) selon la revendication 18, **caractérisé en ce que** le verrou de blocage (71) est disposé sur la surface interne (22) de l'élément de fermeture (16) et est guidé de façon à pouvoir être déplacé dans une direction parallèle à la surface interne (22) de l'élément de fermeture (16) ainsi que dans une direction perpendiculaire à l'extension longitudinale des profilés de guidage (24, 25).
